# FASCICULE DE BREVET EUROPEEN

(11) **EP 4 207 638 B1**
(45) Date de publication et mention de la délivrance du brevet: **02.07.2025**
(21) Numéro de dépôt: 22216832.0
(22) Date de dépôt: 27.12.2022
(51) Int. Cl.: H04J 3/06, H04L 41/14, H04L 43/0864, H04L 43/0817

(54) **PROTOCOLE DE SURVEILLANCE DE TRAFIC DE COMMUNICATION**
KOMMUNIKATIONSVERKEHRSÜBERWACHUNGSPROTOKOLL
PROTOCOL FOR MONITORING COMMUNICATION TRAFFIC

(30) Priorité: 31.12.2021 FR 2114713; 01.06.2022 FR 2205287
(43) Date de publication de la demande: 05.07.2023
(73) Titulaire: Airbus Defence and Space SAS, 31402 Toulouse Cedex 4 (FR)
(72) Inventeur: VEYLAND, René, 78990 ELANCOURT (FR)
(74) Mandataire: Cabinet Le Guen Maillet

(56) Documents cités:
- EP-A1- 2 296 318

## Description

### DOMAINE TECHNIQUE

La présente invention concerne le domaine des sondes réseau permettant de surveiller (« monitor » en anglais) du trafic passant par un tunnel de communication, et détecter et d'évaluer ainsi des états de congestion de réseaux de communication, par exemple de type WAN (« Wide Area Network » en anglais).

### ETAT DE LA TECHNIQUE ANTERIEURE

Les réseaux de communication servent à offrir une grande diversité de services, comme l'échange de communication voix, typiquement des services dits de VoIP (« Voice over IP » en anglais), l'échange de communication audiovisuelle, la diffusion de programmes multimédia, ou encore l'accès à des données, typiquement l'accès à des services Web. Ces services ont des besoins différents en termes de latence de transmission dans les réseaux de communication, et ont des priorités différentes.

Les liens de communication sur lesquels reposent les réseaux de communication sont basés sur des technologies de transmission physique qui peuvent être très diverses. Chacune de ces technologies conduit à des propriétés différentes de canal de transmission utilisé en termes de capacités, c'est-à-dire en bande passante disponible, taux d'erreur, ou variabilité de cette bande passante disponible.

De manière à gérer de manière adéquate l'admission de services en tenant compte de ces propriétés différentes de canal de transmission ou de manière à construire un modèle prédictif du canal de transmission, des sondes réseau sont utilisées pour analyser le trafic transitant dans ces réseaux de communication, et notamment dans des tunnels de communication établis entre des routeurs de ces réseaux de communication.

Une difficulté réside dans l'évaluation fine des états de congestion de ces réseaux de communication.

Il est alors souhaitable de pallier au moins cet inconvénient de l'état de la technique antérieure, et ce, de manière simple, efficace et peu coûteuse.

A noter qu'il est connu le document EP 2 296 318 A1 divulguant un dispositif utilisé comme horloge esclave dans le cadre d'un protocole de type PTP (Precision Time Protocol), permettant de déterminer une durée de transit avec précision par rapport à une horloge maître.

### EXPOSE DE L'INVENTION

A cet effet, l'invention concerne un procédé implémenté dans un système de communication comportant une pluralité de routeur selon la revendication 1 et système de communication correspondant selon la revendication 12. Les revendications dépendantes présentent des modes de réalisation particuliers de l'invention. En outre, il est proposé un procédé implémenté dans un système de communication comportant une pluralité de routeurs, une première sonde réseau étant associée à un premier routeur de ladite pluralité de routeurs et à un premier point de terminaison du premier routeur, une deuxième sonde réseau étant associée à un deuxième routeur de ladite pluralité de routeurs et à un deuxième point de terminaison du premier routeur, le procédé comportant les étapes suivantes dans le cadre d'un surveillance d'un trafic dans un tunnel de communication entre le premier point de terminaison et le deuxième point de terminaison : injecter de façon périodique, par la première sonde, des paquets fanions en parallèle du trafic du tunnel de communication, chaque paquet fanion incluant une information d'horodatage exprimant une référence temporelle d'injection dudit paquet fanion ; collecter des informations relatives à une variation de cadencement de trafic dans le tunnel de communication, la variation de cadencement étant mesurée grâce à une différence entre les informations d'horodatage contenues dans les paquets fanions et des informations d'horodatage d'instant de capture desdits paquets fanions par la deuxième sonde ; évaluer d'éventuelles situations de congestion subies par le tunnel de communication en fonction desdites informations collectées. Ainsi, la différence du cadencement en réception des paquets fanions par rapport à leur cadencement en émission permet d'estimer la variation de cadencement dans le tunnel de communication qui prend le même chemin que les paquets fanions, et ainsi d'évaluer finement les situations de congestion pouvant survenir.

Dans un mode de réalisation particulier, le procédé comprend l'étape suivante : calculer une éventuelle perte de volume de données dans le tunnel de communication, par comparaison entre un comptage de volume de données en sortie du tunnel de communication entre des paquets fanions successifs, détectées par la deuxième sonde, et un comptage de volume de données en entrée du tunnel de communication entre des paquets fanions successifs, détectées par la première sonde.

Dans un mode de réalisation particulier, les paquets fanions sont des paquets de type UDP émis sur un port dédié auxdits paquets fanions. Ainsi, les paquets fanions peuvent être aisément capturés par les sondes réseau.

Dans un mode de réalisation particulier, les paquets fanions sont injectés pour chaque type de service parmi une pluralité de types de service transportés par le tunnel de communication. Ainsi, les situations de congestion peuvent être évaluées pour chaque type de service, donc plus finement.

Dans un mode de réalisation particulier, les paquets fanions sont injectés dans un plan utilisateur en amont du premier point de terminaison par rapport au tunnel de communication.

Dans un mode de réalisation particulier, pour collecter les informations relatives à une variation de cadencement de flux de données dans le tunnel de communication, au moins la deuxième sonde réseau comporte au moins une table de mesures pour stocker un historique d'échantillonnages de paquets fanions capturés en sortie du tunnel de communication, chaque entrée de la table de mesures correspondant à un échantillon comportant : un champ d'information d'horodatage telle que contenue dans le paquet fanion correspondant à l'échantillon en question ; un champ d'information d'horodatage marquant l'instant auquel le paquet fanion correspondant à l'échantillon en question a été capturé ; un champ de numéro de séquence tel que contenu dans le paquet fanion correspondant à l'échantillon en question ; et un champ de comptage de données transitant dans le tunnel de communication entre le paquet fanion correspondant à l'échantillon en question et le paquet fanion correspondant à l'échantillon suivant dans la table de mesures. Ainsi, l'historique d'échantillonnages est aisément construit par la deuxième sonde pour permettre l'évaluation des situations de congestion.

Dans un mode de réalisation particulier, la première sonde transmet à la deuxième sonde une requête requérant de transmettre en réponse des informations dérivées par calculs d'un historique d'échantillonnages des paquets fanions reçus par la deuxième sonde, la requête impliquant un intervalle de numéros de séquence à considérer, les calculs étant destinés à évaluer les éventuelles situations de congestion et incluant : une latence minimum de transit des paquets fanions dudit intervalle de numéros de séquence ; une latence maximum de transit des paquets fanions dudit intervalle de numéros de séquence ; une latence moyenne de transit des paquets fanions dudit intervalle de numéros de séquence ; une gigue minimum subie par les paquets fanions dudit intervalle de numéros de séquence ; une gigue maximum subie par les paquets fanions dudit intervalle de numéros de séquence ; une gigue moyenne subie dudit intervalle de numéros de séquence ; une volumétrie de transit de données dans le tunnel de communication sur ledit intervalle de numéros de séquence. Ainsi, la consommation en bande passante pour transmettre par la deuxième sonde à la première sonde des informations permettant d'évaluer les situations de congestion est réduite.

Dans un mode de réalisation particulier, la première sonde transmet à la deuxième sonde une requête requérant de transmettre en réponse tout ou partie de l'historique d'échantillonnages des paquets fanions reçus par la deuxième sonde, la première sonde réalisant alors des calculs destinés à évaluer les éventuelles situations de congestion et incluant : une latence minimum de transit des paquets fanions dudit intervalle de numéros de séquence ; une latence maximum de transit des paquets fanions dudit intervalle de numéros de séquence ; une latence moyenne de transit des paquets fanions dudit intervalle de numéros de séquence ; une gigue minimum subie par les paquets fanions dudit intervalle de numéros de séquence ; une gigue maximum subie par les paquets fanions dudit intervalle de numéros de séquence ; une gigue moyenne subie dudit intervalle de numéros de séquence ; une volumétrie de transit de données dans le tunnel de communication sur ledit intervalle de numéros de séquence.

Dans un mode de réalisation particulier, la première sonde réseau comporte au moins une autre table de mesures pour stocker un historique d'échantillonnages de paquets fanions capturés en entrée du tunnel de communication, chaque entrée de cette autre table de mesures correspondant à un échantillon comportant : un champ d'information d'horodatage telle que contenue dans le paquet fanion correspondant à l'échantillon en question ; un champ d'information d'horodatage marquant l'instant auquel le paquet fanion correspondant à l'échantillon en question a été capturé ; un champ de numéro de séquence tel que contenu dans le paquet fanion correspondant à l'échantillon en question ; et un champ de comptage de données transitant dans le tunnel de communication entre le paquet fanion correspondant à l'échantillon en question et le paquet fanion correspondant à l'échantillon suivant dans la table de mesures. Ainsi, l'historique d'échantillonnages est aisément construit par la première sonde pour permettre l'évaluation des situations de congestion.

Dans un mode de réalisation particulier, la première sonde réseau calcule une information supplémentaire de latence et une information supplémentaire de gigue, qui sont liées à la qualité de service du premier routeur, en comparant les informations d'horodatage contenues dans les paquets fanions injectés et les informations d'horodatage de capture des paquets fanions capturés par ladite première sonde réseau. Ainsi, l'implication du routeur en question dans les situations de congestion peut être aisément évaluée.

Dans un mode de réalisation particulier, la première sonde estime en outre une éventuelle perte de volume de données qui est liée à la qualité de service du premier routeur, à partir de détection de pertes de paquets fanions injectés par la première sonde. Ainsi, l'évaluation de l'implication du routeur en question dans les situations de congestion est complétée.

Il est aussi proposé un système de communication comportant des sondes réseau et une pluralité de routeurs, une première sonde réseau étant associée à un premier routeur de ladite pluralité de routeurs et à un premier point de terminaison du premier routeur, une deuxième sonde réseau étant associée à un deuxième routeur de ladite pluralité de routeurs et à un deuxième point de terminaison du premier routeur, le système de communication comportant de la circuiterie électronique configurée pour effectuer les étapes suivantes dans le cadre d'un surveillance d'un trafic dans un tunnel de communication entre le premier point de terminaison et le deuxième point de terminaison : injecter de façon périodique, par la première sonde, des paquets fanions en parallèle du trafic du tunnel de communication, chaque paquet fanion incluant une information d'horodatage exprimant une référence temporelle d'injection dudit paquet fanion ; collecter des informations relatives à une variation de cadencement de trafic dans le tunnel de communication, la variation de cadencement étant mesurée grâce à une différence entre les informations d'horodatage contenues dans les paquets fanions et des informations d'horodatage d'instant de capture desdits paquets fanions par la deuxième sonde ; évaluer d'éventuelles situations de congestion subies par le tunnel de communication en fonction desdites informations collectées.

### BREVE DESCRIPTION DES DESSINS

La description suivante d'au moins un mode de réalisation est établie en relation avec les dessins joints, parmi lesquels :
[Fig. 1A] illustre schématiquement un système de communication ;
[Fig. 1B] illustre schématiquement un agencement de sonde réseau ;
[Fig. 1C] illustre schématiquement un agencement complémentaire de sonde réseau ;
[Fig. 2] illustre schématiquement une mise en relation de sondes réseau avec un orchestrateur ;
[Fig. 3] illustre schématiquement un exemple d'architecture matérielle permettant l'implémentation des sondes réseau du système de communication ;
[Fig. 4] illustre schématiquement un organigramme de mise en place de sonde réseau pour la surveillance d'un tunnel de communication en amont dudit tunnel de communication ;
[Fig. 5] illustre schématiquement un organigramme de mise en place de sonde réseau pour la surveillance d'un tunnel de communication en aval dudit tunnel de communication ;
[Fig. 6] illustre schématiquement une variation de cadencement de flux de données dans un tunnel de communication ;
[Fig. 7] illustre schématiquement un organigramme de création et de mise à jour d'une ou plusieurs tables de mesures stockant des informations représentatives de la variation de cadencement de flux de données de la Fig. 6 ;
[Fig. 8] illustre schématiquement un exemple de structure de table de mesures ;
[Fig. 9] illustre schématiquement un organigramme de collaboration de sondes réseau pour évaluer une situation de congestion dans un tunnel de communication, dans un premier mode de réalisation ; et
[Fig. 10] illustre schématiquement un organigramme de collaboration de sondes réseau pour évaluer une situation de congestion dans un tunnel de communication, dans un deuxième mode de réalisation.

### EXPOSE DETAILLE DE MODES DE REALISATION

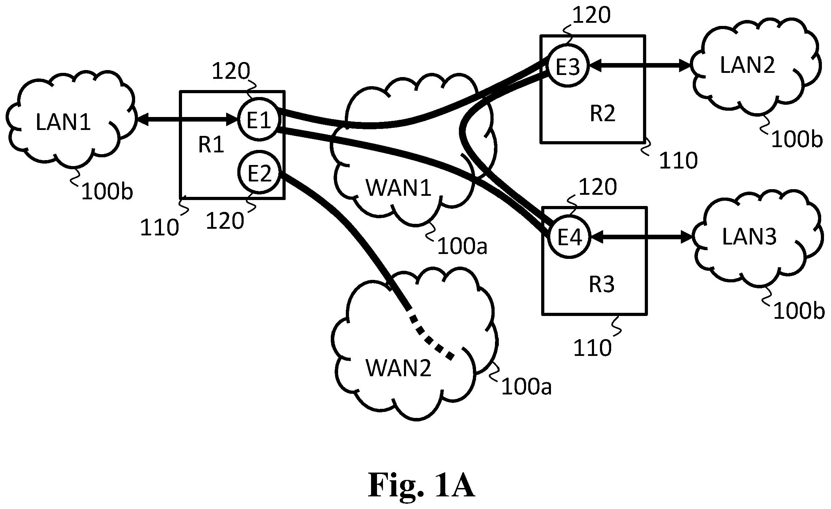

La Fig. 1A illustre schématiquement un système de communication.

Le système de communication comporte une pluralité de routeurs 110. Trois routeurs R1 à R3 sont représentés, à titre illustratif, sur la Fig. 1A. Les routeurs 110 sont interconnectés par au moins un réseau de communication 100a sur lequel lesdits routeurs 110 établissent des tunnels de communication. Ainsi, les routeurs 110 comportent au moins un point de terminaison (« end-point » en anglais) 120 de tunnel de communication. Chaque point de terminaison 120 peut concerner un ou plusieurs tunnels de communication.

Chaque réseau de communication 100a peut être de nature variée, qu'elle soit filaire comme par exemple des liens Ethernet, ou de la fibre optique, ou radio comme par exemple des liens satellites. Deux réseaux de communications 100a WAN1 et WAN2, de type réseaux étendus WAN (« Wide Area Network » en anglais), sont représentés à titre illustratif sur la Fig. 1A.

Les tunnels de communication sont par exemple implémentés grâce au protocole GRE (« Generic Routing Encapsulation » en anglais), ou au protocole mGRE (« Multipoint Generic Routing Encapsulation » en anglais), ou à la famille de standards IPSec (« Internet Protocol Security » en anglais). D'autres protocoles de mise en tunnel peuvent être utilisés en variante.

Préférentiellement, les tunnels de communications sont sécurisés par chiffrement, de sorte que les données encapsulées dans le protocole d'encapsulation du tunnel de communication ne soient pas déchiffrables par un dispositif qui serait situé entre les deux points de terminaison 120 du tunnel de communication.

Par exemple, les tunnels de communication sont utilisés pour mettre en relation d'autres réseaux de communication 100b par le biais desdits routeurs 110. Comme illustré sur la Fig. 1A, les routeurs 110 et les tunnels de communication permettent d'interconnecter des réseaux locaux LAN (« Local Area Network » en anglais), comme des réseaux WLAN (« Wireless Local Area Network » en anglais), par exemple de la famille de standard IEEE 802.11. Dans un mode de réalisation particulier, le système de communication permet ainsi de mettre en relation sécurisée des terminaux présents sur des réseaux locaux LAN1, LAN2, LAN3 100b (appelés réseaux rouges) au travers du réseau étendu WAN1 100a (appelé réseau noir). Ainsi, de manière illustrative sur la Fig. 1A, un premier tunnel de communication est établi sur le réseau WAN1 entre un point de terminaison E1 du routeur R1 et un point de terminaison E3 du routeur R2, et un deuxième tunnel de communication est établi sur le réseau WAN1 entre le point de terminaison E1 et un point de terminaison E4 du routeur R3. Un troisième tunnel de communication est établi sur le réseau WAN1 entre le point de terminaison E3 du routeur R2 et le point de terminaison E4 du routeur R3. Un quatrième tunnel de communication est établi sur le réseau WAN2 entre un point de terminaison E2 du routeur R1 et un point de terminaison 120 d'un autre routeur non représenté.

Le système de communication est équipé de sondes réseau (« network probe » en anglais). Les sondes réseau sont agencées et configurées pour effectuer des mesures de débit de données entrant dans les tunnels de communication et de données sortant des tunnels de communication, c'est-à-dire au niveau des points de terminaison 120 des tunnels de communication, de manière à pouvoir détecter et évaluer des situations de congestion dans le ou les réseaux de communication 100a.

Les mesures de débit sont des mesures, sur des périodes temporelles délimitées par des paquets fanions (« flag packets » en anglais), de volumes de données encapsulées dans le protocole des tunnels de communication. Les sondes réseau peuvent être incluses dans les routeurs 110 ou y être connectées, dès lors que lesdites sondes réseau ont accès au plan de données des routeurs 110 afin de pouvoir mettre en place un protocole de communication inter-sondes et de pouvoir injecter des paquets fanions afin de cadencer les mesures de débit de données dans les tunnels de communication, et de capter le volume de paquets transmis dans les tunnels de communication et les paquets fanions y afférents.

Le protocole de communication inter-sondes permet aux sondes réseau des points de terminaison 120 d'un même tunnel de communication de s'envoyer des informations relatives auxdites mesures afin d'évaluer des états de congestion sur le ou les réseaux de communication 100a.

L'agencement présenté ci-dessus permet d'assurer que le protocole de communications inter-sondes emprunte le même chemin que les paquets du tunnel de communication supervisé par les sondes réseau en question.

Une dite sonde réseau est ainsi associée à chaque point de terminaison 120 des tunnels de communication à surveiller en termes de débit de données encapsulées. A noter que des tunnels de communication peuvent exister dans le système de communication alors qu'aucune sonde réseau n'est mise en place à leurs points de terminaison 120.

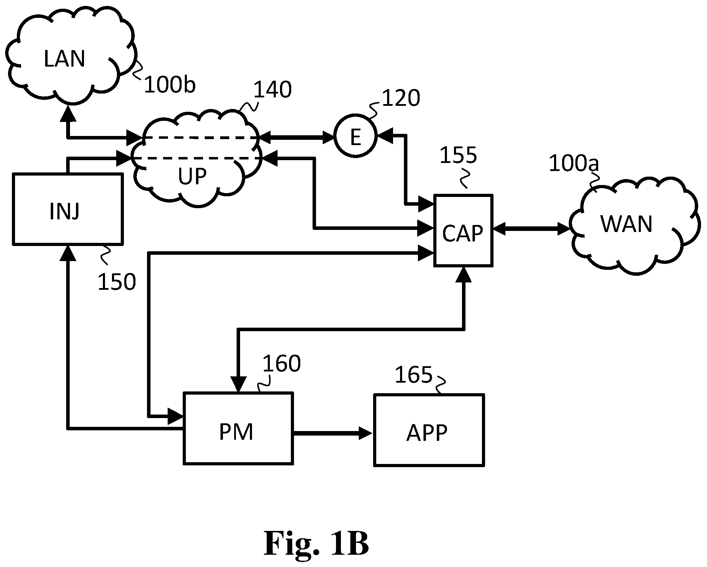

Dans un mode de réalisation particulier, les sondes réseau sont agencées comme schématiquement illustrées sur la Fig. 1B.

La Fig. 1B présente ainsi une architecture modulaire de sonde réseau comportant un gestionnaire de sonde réseau 160, un injecteur 150, un module applicatif 165, et un module de capture 155.

Le module de capture 155 inclut un module de filtrage permettant de récupérer, via un module d'interface du routeur auquel ladite sonde réseau est associée, des paquets de données relatifs à des tunnels de communication. Ainsi, le module de filtrage permet par exemple d'obtenir une copie de tout paquet de données de type GRE, mGRE ou IPSec destiné ou émanant du point de terminaison 120 auquel ladite sonde réseau est associée. De plus, le module de filtrage permet d'obtenir une copie de tout paquet fanion (tel que décrit ci-après) inclus dans le trafic du tunnel de communication supervisé par la sonde réseau en question. Le module de capture 155 inclut préférentiellement deux sous-modules : un sous-module de capture du trafic entrant dans le tunnel de communication et un sous-module de capture de trafic sortant du tunnel de communication, le tunnel de communication étant bidirectionnel. On peut ainsi voir le module de capture 155 comme deux points de capture spécialisés par point de terminaison 120.

L'injecteur 150 est adapté et configuré pour injecter des paquets fanions en parallèle du trafic du tunnel de communication supervisé (trafic sortant), c'est-à-dire lorsque la sonde réseau en question est associée au point de terminaison 120 en entrée du tunnel de communication. Les paquets fanions ne sont donc pas encapsulés dans le protocole du tunnel de communication, mais suivent le même chemin. En effet, si le protocole du tunnel de communication emploie un chiffrement des données, les paquets fanions ne pourraient alors pas être détectés en réception. La sonde réseau est configurée et adaptée de sorte que l'injecteur réseau 150 injecte les paquets fanions dans un plan utilisateur (« user plane » en anglais) 140 en amont du point de terminaison 120 par rapport au tunnel de communication supervisé, mais sans que les paquets fanions ne transitent par le tunnel de communication en question. Le plan utilisateur 140 est le chemin de données dans le routeur 110 auquel ladite sonde réseau est associée et par lequel transitent les paquets issus du réseau de communication 100b qui sont transmis dans le tunnel de communication en question par le point de terminaison 120 local. En variante, lorsque le tunnel de communication n'emploie pas de chiffrement, les paquets fanions peuvent faire partie du trafic transitant dans le tunnel de communication et être vus par le point de terminaison 120 local comme étant issus du réseau de communication 100b en amont du point de terminaison 120 local par rapport au tunnel de communication supervisé. Dans une autre variante où le trafic dans le tunnel de communication peut être chiffré, l'injecteur 150 injecte les paquets fanions entre le point de terminaison 120 en entrée du tunnel de communication et le point de capture local de la sonde réseau considérée. Dans tous les cas de figure évoqués ci-dessus, cela implique que les paquets fanions sont perceptibles et détectables par le point de capture local de la sonde réseau considérée.

Il convient de noter qu'une partie du contenu des paquets fanions, non nécessaire à leur routage, peut être chiffrée entre les sondes réseau impliquées. Cependant, le chiffrement appliqué est maîtrisé par les sondes réseau en question et est indépendant du chiffrement utilisé par le tunnel de communication auquel les paquets fanions en question sont associés.

L'injecteur 150 est configuré pour générer et émettre les paquets fanions de façon périodique, selon une période de durée définie par le gestionnaire de sonde réseau 160 ou par pré-configuration. La cadence des paquets fanions injectés peut être modifiée ou ajustée par le gestionnaire de sonde réseau 160 dans le temps.

Dans un mode de réalisation particulier, les paquets fanions sont des paquets UDP (« User Datagram Protocol » en anglais) émis sur un port dédié auxdits paquets fanions. Préférentiellement, de tels paquets fanions sont injectés pour chaque type de service transporté par le tunnel de communication supervisé. Par exemple, des paquets fanions sont injectés par l'injecteur 150 pour chaque valeur de champ DSCP (« Differentiated Services Code Point » en anglais) des paquets du tunnel de communication.

Chaque paquet fanion inclut une information d'horodatage (« timestamp » en anglais) exprimant une référence temporelle d'injection dudit paquet fanion, ainsi qu'un identifiant de séquence (Seq).

Par exemple, chaque paquet fanion comporte un entête de routage (e.g., de type IP) comportant un champ d'adresse source indiquant l'adresse de la sonde réseau locale, un champ d'adresse destination indiquant l'adresse de la sonde réseau distante, et un champ de type de service (e.g., de type DSCP) indiquant le type de service dans lequel s'inscrit le paquet fanion en question. L'entête de routage a par exemple une taille de 20 à 40 octets. Dans cet exemple, chaque paquet fanion comporte ensuite un entête de transport (e.g., de type UDP) indiquant un port de destination, et éventuellement un port source, dédié aux paquets fanions (et connu de toutes les sondes réseau du système de communication). L'entête de transport a par exemple une taille de 8 octets. Toujours dans cet exemple, chaque paquet fanion comporte ensuite un champ de type de paquet, par exemple ayant une taille de 1 octet et de valeur égale à 0. Toujours dans cet exemple, chaque paquet fanion comporte ensuite un champ d'identifiant de séquence qui indique un numéro d'ordre (cyclique) dudit paquet fanion dans une succession de transmission de dits paquets fanions par l'injecteur 150, ainsi qu'un champ d'horodatage ayant une taille de 8 octets exprimant une référence temporelle d'émission dudit paquet fanion par l'injecteur 150 avec une précision à la milliseconde. Les paquets fanions ainsi construits permettent un filtrage aisé en réception par la sonde réseau de l'autre côté du tunnel de communication supervisé.

Le gestionnaire de sonde réseau 160 est configuré et agencé pour stocker des métriques liées à des mesures effectuées grâce au module de capture 155, coordonner la mise en place et le déroulement de communications inter-sondes pour un tunnel de communication donné, et consolider les métriques stockées afin d'alimenter le module applicatif 165 en informations de surveillance de tunnel de communication.

Le gestionnaire de sonde réseau 160 implémente un protocole de communication inter-sondes, permettant ainsi à ladite sonde réseau de communiquer avec une ou plusieurs autres dites sondes réseau dans le cadre de la supervision d'un ou plusieurs dits tunnels de communication respectifs. Un port UDP dédié au protocole de communication inter-sondes est préférentiellement utilisé pour ce faire. Un tel protocole inter-sondes permet notamment un partage d'informations de mesures effectuées par lesdites sondes réseau ou des informations de calculs qui en découlent.

Dans un mode de réalisation particulier, chaque sonde réseau a une adresse, pour communiquer dans le ou les réseaux de communication 100a, qui est prédéfinie par rapport à l'adresse du point de terminaison 120 de tunnel de communication à laquelle ladite sonde réseau est associée. Cela permet de mettre automatiquement en communication les sondes réseau concernées lorsqu'un nouveau tunnel de communication est détecté (e.g., établi). Cela permet aussi de configurer automatiquement le filtrage des paquets fanions transmis par l'injecteur 150, par la sonde réseau distante associée au point de terminaison 120 de l'autre côté du tunnel de communication surveillé.

Plus précisément, l'adresse de la sonde réseau est déterminée en appliquant une fonction de translation bijective par rapport à l'adresse du point de terminaison 120 auquel ladite sonde réseau est associée.

Dans un mode de réalisation particulier, l'adresse de ladite sonde réseau est obtenue en appliquant une règle de conversion (« mapping » en anglais) prédéfinie à partir de l'adresse du point de terminaison 120 auquel ladite sonde réseau est associée.

Dans un mode de réalisation particulier, l'adresse de ladite sonde réseau est obtenue en appliquant un décalage (« offset » en anglais) prédéfini (positif ou négatif) par rapport à l'adresse du point de terminaison 120 auquel ladite sonde réseau est associée.

Dans un mode de réalisation particulier, l'adresse de ladite sonde réseau est obtenue en ajoutant un *(i.e.,* une unité) à l'adresse du point de terminaison 120 auquel ladite sonde réseau est associée.

Le même mécanisme s'applique pour la définition des adresses des autres sondes réseau du système de communication. Ainsi, l'adresse d'une sonde réseau distante (i.e., de l'autre côté d'un tunnel de communication supervisé) est déterminée en appliquant la fonction de translation bijective par rapport à l'adresse du point de terminaison 120 auquel ladite sonde réseau distante est associée.

En variante de réalisation, les sondes réseau ont des adresses indépendantes des adresses des points de terminaison 120 de tunnel de communication. Eventuellement, les injecteurs 150 ont des adresses qui leur sont propres. A la découverte d'un tunnel de communication, la sonde réseau en question notifie son plan d'adressage à la sonde réseau distante. Pour ce faire, un message est envoyé sur un port dédié (par exemple, un port UDP dédié) aux messages inter-sondes, avec un identifiant de message dédié. Le message en question indique quels points de terminaison 120 sont concernés par le tunnel de communication découvert. La sonde distante étant configurée pour recevoir (écouter) les messages reçus sur ce port dédié, cette sonde distante peut reconnaître le tunnel de communication (le point de terminaison 120) qui la concerne, et le plan d'adressage utilisé de l'autre côté du tunnel de communication lui devient connu. Cette sonde distante peut à son tour transmettre son propre plan d'adressage de la même manière. Dans un mode de réalisation particulier, les paquets fanions incluent une information indiquant quels points de terminaison 120 sont concernés par le tunnel de communication auquel sont associés lesdits paquets fanions, ainsi que le plan d'adressage évoqué ci-dessus.

Les messages échangés dans le cadre du protocole inter-sondes sont préférentiellement d'un type de trafic de plus haute priorité. Par exemple, les messages échangés dans le cadre du protocole inter-sondes ont une valeur de champ DSCP plus prioritaire que les paquets qui sont encapsulés dans les tunnels de communication supervisés (i.e., plus prioritaire que les paquets communications entre les réseaux de communication 100b). Dans un mode de réalisation particulier, les messages échangés dans le cadre du protocole inter-sondes ont une valeur de champ DSCP qui correspond à une priorité maximale possible. Cela permet de limiter l'impact des situations de congestions sur le transit desdits messages échangés dans le cadre du protocole inter-sondes et ainsi permettre une meilleure réactivité, au besoin, aux situations de congestion.

Le module applicatif 165 est en charge de collecter des informations relatives à une variation de cadencement de flux de données dans le tunnel de communication supervisé par ladite sonde réseau, la variation de cadencement étant mesurée grâce à une variation de différence entre les informations d'horodatage contenues dans les paquets fanions et des informations d'horodatage d'instant de capture desdits paquets fanions. Le module applicatif 165 peut effectuer des calculs sur lesdites mesures afin de détecter et d'évaluer des situations de congestion, en prenant en compte des mesures aussi effectuées par un module applicatif équivalent dans une sonde réseau distante en charge de superviser le tunnel de communication à son autre point de terminaison.

Par exemple, le module applicatif 165 peut être en charge d'instruire le routeur local pour modifier des profils de transmission de données dans le ou les réseaux de communication 100a de sorte à prendre en compte, préférentiellement améliorer (e.g., gestion d'admission de services), les situations de congestion qui seraient révélées par les mesures effectuées ou des calculs qui en découlent. En variante, le module applicatif 165 est en charge de remonter à un orchestrateur des informations relatives aux mesures effectuées ou aux calculs qui en découlent.

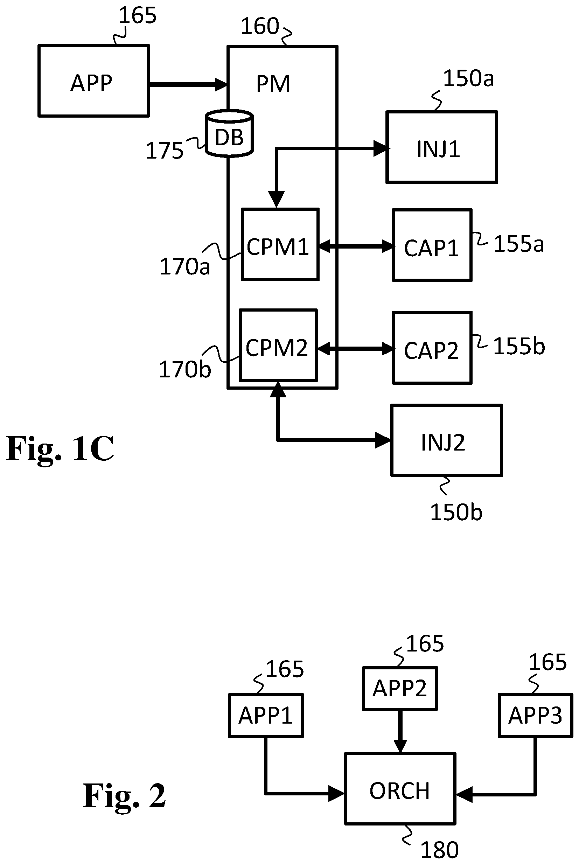

La Fig. 1C illustre schématiquement un agencement complémentaire de sonde réseau.

Dans le schéma de la Fig. 1C, le gestionnaire de sonde réseau 160 comporte un gestionnaire de plan de contrôle (« control plane » en anglais) pour chaque tunnel de communication impliquant le routeur 110 auquel est associée la sonde réseau considérée, c'est-à-dire pour chaque injecteur 150 local et chaque module de capture 155 local.

Chaque gestionnaire de plan de contrôle gère et configure les opérations d'un injecteur 150 et d'un module de capture 155 qui lui sont associés. Ledit gestionnaire de plan de contrôle implémente le protocole de communication inter-sondes pour la supervision du tunnel de communication pour lequel ledit injecteur 150 et ledit module de capture 155 opèrent. Ledit gestionnaire de plan de contrôle effectue, ou coordonne, les opérations de mesure de trafic via ledit tunnel de communication, ainsi que les calculs qui en découlent éventuellement.

Sur la Fig. 1C, la sonde réseau considérée est associée à un routeur en extrémité de deux tunnels de communication. Ces tunnels de communication peuvent avoir un même point de terminaison 120 dans le routeur 110 en question, ou deux points de terminaison 120 distincts. Deux injecteurs INJ1 150a et INJ2 150b, et deux modules de capture CAP1 155a et CAP 2 155b respectifs, sont ainsi représentés sur la Fig. 1C. Le gestionnaire de sonde réseau 160 comporte alors deux gestionnaires de plan de contrôle respectifs CPM1 170a et CPM2 170b.

Dans le schéma de la Fig. 1C, le gestionnaire de sonde réseau 160 comporte en outre une mémoire 175, par exemple sous forme d'une base de données DB (« Database » en anglais). La mémoire en question peut en variante être externe au gestionnaire de sonde réseau 160, voire à la sonde réseau elle-même, et le gestionnaire de sonde réseau 160 est connecté à ladite mémoire et a accès en lecture, écriture, et effacement à ladite mémoire. La mémoire 175 est notamment utilisée par le gestionnaire de sonde réseau 160 pour stocker des informations de captures effectuées par chaque module de capture 155 local, des mesures qui en découlent, des métriques liées à ces mesures, et éventuellement des résultats de calculs effectués sur lesdites métriques.

D'autres architectures modulaires que celle présentée ci-dessus en relation avec les Figs. 1B et 1C peuvent être conçues sans départir des principes et comportement décrits ici, notamment en répartissant autrement les fonctions réalisées par les modules exposés ci-dessus.

Dans un mode de réalisation particulier tel qu'illustré sur la Fig. 2, les sondes réseau sont en communication avec un orchestrateur 180, plus particulièrement par le biais de leurs modules applicatifs 165. Les mesures effectuées par les sondes réseau ou des calculs qui en découlent peuvent ainsi être partagés avec l'orchestrateur 180, afin notamment de détecter et d'évaluer des situations de congestion sur le ou les réseaux de communication 100a et ainsi d'adapter des admissions de service en conséquence. Ainsi, le système de communication est particulièrement adapté aux infrastructures de type SD-WAN (« Software-Defined Wide Area Network » en anglais). Dans un mode de réalisation particulier, l'orchestrateur 180 définit et impose (« enforce » en anglais) une politique d'admission de services dans le ou les réseaux de communication 100a qui tient compte des capacités effectives de communication dans ledit ou lesdits réseaux de communication 100a et qui prend donc en compte les situations de congestion révélées par les sondes réseau.

En variante, les mesures effectuées par les sondes réseau ou des résultats de calculs qui en découlent sont partagés avec l'orchestrateur 180, afin de permettre à l'orchestrateur 180, ou à tout autre dispositif ou système informatique centralisé, d'établir un modèle prédictif de congestion du ou des réseaux de communication 100a.

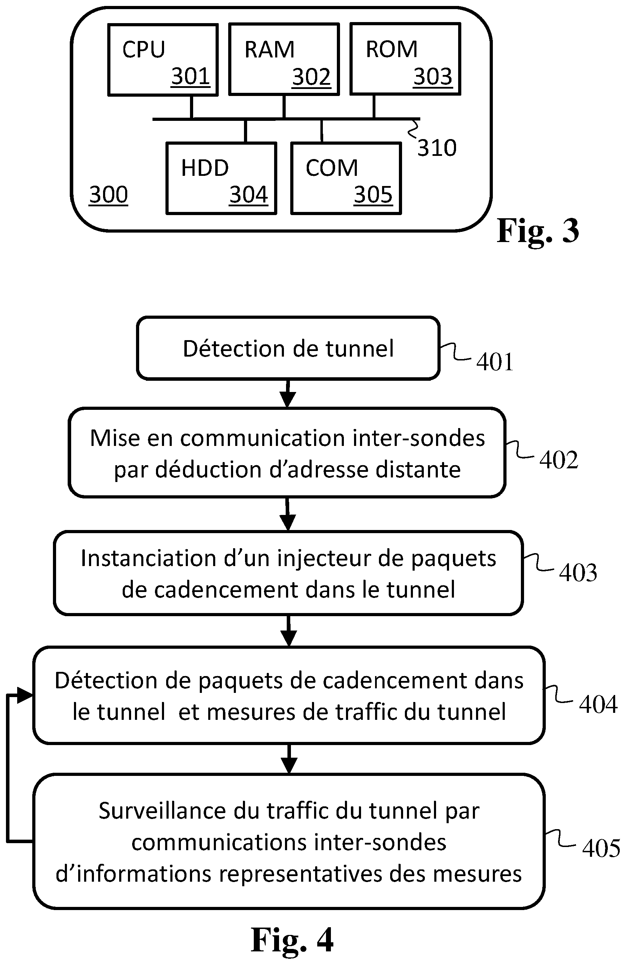

La Fig. 3 illustre schématiquement un exemple d'architecture matérielle de sonde réseau, et permettant notamment d'implémenter l'architecture modulaire des Figs. 1B et 1C.

La sonde réseau comprend alors, reliés par un bus de communication 310 : un processeur ou CPU (pour « Central Processing Unit » en anglais) 301, ou une grappe de tels processeurs, comme par exemple des GPU (« Graphics Processing Units » en anglais) ; une mémoire vive RAM (pour « Random Access Memory » en anglais) 302 ; une mémoire morte ROM (pour « Read Only Memory » en anglais) 303, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 304, ou un lecteur de support de stockage, tel qu'un lecteur de cartes SD (pour « Secure Digital » en anglais) ; un ensemble d'interfaces d'entrées et/ou sorties, telles que des interfaces de communication 305, permettant notamment à la sonde réseau de capter des paquets à destination du routeur auquel la sonde réseau est associée, ou en transit via le routeur auquel la sonde réseau est associée, d'injecter et de capter des paquets fanions comme décrit plus en détails ci-après, ainsi que de communiquer avec d'autres sondes réseau du système de communication ou avec l'orchestrateur 180.

Le processeur 301 est capable d'exécuter des instructions chargées dans la RAM 302 à partir de la ROM 303, d'une mémoire externe (non représentée), d'un support de stockage, tel qu'une carte SD ou le disque dur HDD, ou d'un réseau de communication. Lorsque la sonde réseau est mise sous tension, le processeur 301 est capable de lire de la RAM 302 des instructions et de les exécuter. Ces instructions forment un programme d'ordinateur causant l'implémentation, par le processeur 301, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

Il en découle que l'architecture modulaire des Figs. 1B et 1C peut être implémentée sous forme logicielle par exécution d'un ensemble d'instructions par une machine programmable, ou être implémenté sous forme matérielle par une machine ou un composant dédié ou un ensemble de composants dédiés.

D'une manière générale, chaque sonde réseau comprend de la circuiterie électronique agencée et configurée pour implémenter les étapes, comportements et algorithmes décrits ici, et notamment l'architecture modulaire des Figs. 1B et 1C.

A noter que l'orchestrateur 180 peut aussi comprendre de manière analogue de la circuiterie électronique agencée et configurée pour implémenter les étapes et comportements décrits ici en relation avec ledit orchestrateur 180.

La Fig. 4 illustre schématiquement un organigramme de mise en place de sonde réseau pour la surveillance d'un tunnel de communication en amont dudit tunnel de communication.

Dans une étape 401, la sonde réseau en question détecte un nouveau tunnel de communication dont un point de terminaison est le point de terminaison 120 auquel est associée ladite sonde réseau. La détection d'un nouveau tunnel de communication est préférentiellement réalisée par détection de la transmission d'un paquet d'encapsulation de tunnel, par exemple de type GRE, mGRE ou IPSec, correspondant à un tunnel de communication qui n'avait pas été précédemment détecté. Un nouveau tunnel de communication est ainsi détecté lorsque l'adresse source et l'adresse destination forment un couple de points de terminaison 120 encore inconnu de ladite sonde réseau (sachant que ladite sonde réseau est associée au point de terminaison 120 d'entrée dans le tunnel de communication, pour le sens de communication considéré).

Dans une étape 402, dans un mode de réalisation particulier, la sonde réseau déduit l'adresse d'une sonde réseau distante, avec laquelle ladite sonde réseau doit collaborer pour la surveillance du trafic du tunnel de communication en question. Pour ce faire, ladite sonde réseau récupère l'adresse du point de terminaison distant, c'est-à-dire celui qui est de l'autre côté du tunnel de communication qui a été nouvellement détecté à l'étape 401. L'adresse source correspond au point de terminaison 120 auquel est associée ladite sonde réseau, donc l'adresse du point de terminaison distant est l'adresse destination. A noter qu'aucune inspection profonde de paquet DPI (« Deep Packet Inspection » en anglais) n'est requise. Ladite sonde réseau déduit alors l'adresse de la sonde réseau distante, avec laquelle ladite sonde réseau doit collaborer pour surveiller le tunnel de communication en question, en appliquant la fonction de translation bijective, comme déjà expliqué ci-avant. Cette déduction d'adresse permet d'établir les communications inter-sondes et la configuration de l'injecteur 150 local.

Ainsi, la sonde réseau peut effectuer une instanciation automatique de communications inter-sonde entre ladite sonde réseau, qui supervise donc un premier point de terminaison 120 du tunnel de communication en question, et la sonde réseau distante, qui supervise le second point de terminaison 120 de ce tunnel de communication. L'instanciation automatique des communications inter-sondes est réalisable grâce à la prédéfinition des adresses des sondes réseau par rapport aux adresses de leurs points de terminaison respectifs. Préférentiellement, chaque sonde réseau ouvre un connecteur réseau (« socket » en anglais) avec l'adresse du point de terminaison 120 qui lui est associé, à laquelle la fonction de translation bijective est appliquée, et avec un port UDP dédié. Cela permet à chaque sonde réseau de recevoir des messages UDP qui sont adressés, par tout autre sonde réseau du système de communication, à destination de cette adresse et de ce port UDP dédié.

Comme déjà évoqué, d'autres approches de partage de plan d'adressage peuvent être implémentées.

Ainsi, lorsqu'un tunnel de communication est mis en place entre deux points de terminaison 120, chacune des sondes réseau surveillant une des extrémités dudit tunnel de communication détecte le transit d'un paquet dudit tunnel de communication.

Dans une étape 403, la sonde réseau instancie un injecteur de paquets de cadencement dans le tunnel de communication, c'est-à-dire un injecteur de paquets fanions. En appliquant le même algorithme, la sonde réseau distante instancie aussi un injecteur de paquets de cadencement dans le tunnel de communication, ce qui permet de créer une horloge de référence dans les deux sens de communication entre les sondes réseau via le tunnel de communication.

Dans une étape 404, la sonde réseau effectue des captures et des mesures de débit de données pour le tunnel de communication en question. Les mesures de débit de données sont réalisées par comptage de volume de données transmises entre des paquets fanions successifs, détectés dans le trafic sortant du tunnel de communication. Les mesures de débit de données peuvent être réalisées par type de service dans le tunnel de communication, par exemple en s'appuyant sur une information de type de service (e.g. champ DSCP) incluse dans les paquets d'encapsulation du tunnel de communication.

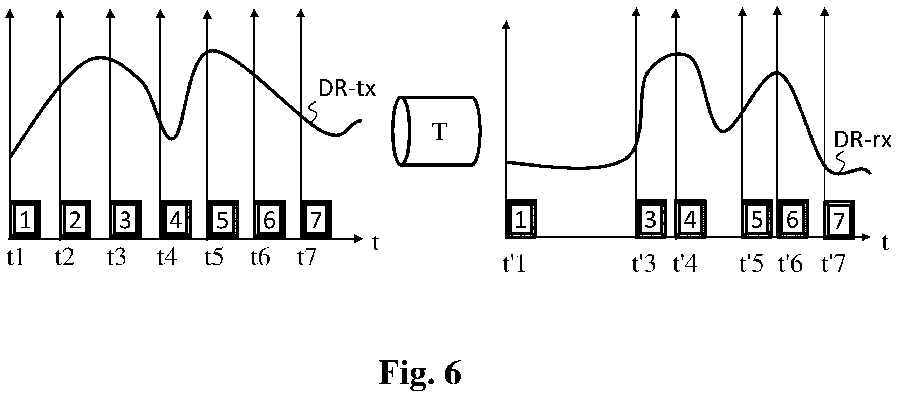

Dans une étape 405, la sonde réseau effectue une surveillance du trafic de données dans le tunnel de communication en question, à partir des mesures effectuées à l'étape 404. Le principe de la surveillance du tunnel de communication consiste à comparer les mesures de débit de données entrant dans le tunnel de communication (au niveau d'un point de terminaison) et celles du débit de données sortant du tunnel de communication (au niveau de l'autre point de terminaison). Une information représentative des mesures de débit effectuées par une sonde réseau est transmise à l'autre sonde réseau de l'autre côté du tunnel de communication (potentiellement dans les deux sens), et une différence entre ces débits au-delà d'une marge prédéterminée met en évidence une congestion. Les paquets fanions servent de référence d'horloge pour déterminer des variations de cadencement entre l'entrée et la sortie du tunnel de communication, comme schématiquement illustré sur la Fig. 6.

Une boucle est alors réalisée entre les étapes 405 et 404, de sorte à surveiller le trafic dans le tunnel de communication en question, par cycles temporels définis par la fréquence d'émission des paquets fanions.

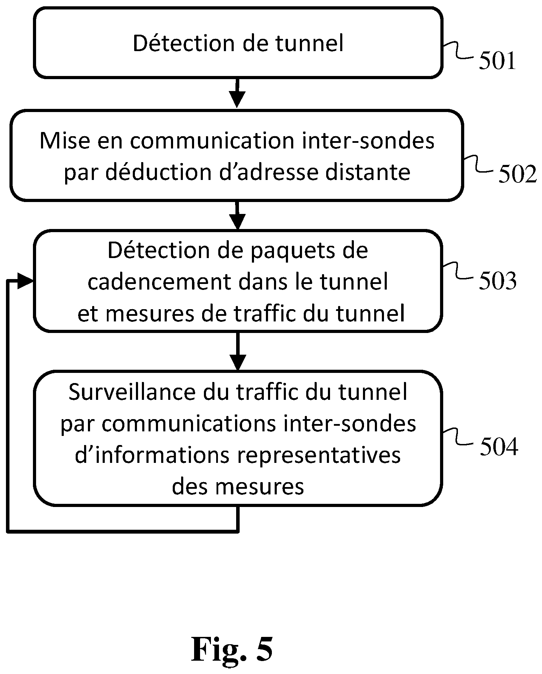

La Fig. 5 illustre schématiquement un organigramme de mise en place de sonde réseau pour la surveillance d'un tunnel de communication en aval d'un tunnel de communication.

Dans une étape 501, la sonde réseau en question détecte un nouveau tunnel de communication dont un point de terminaison est le point de terminaison 120 auquel est associée ladite sonde réseau. La détection d'un nouveau tunnel de communication est préférentiellement réalisée par détection de la réception d'un paquet d'encapsulation de tunnel, par exemple de type GRE, mGRE ou IPSec, correspondant à un tunnel de communication qui n'avait pas été précédemment détecté. Un nouveau tunnel de communication est ainsi détecté lorsque l'adresse source et l'adresse destination forment un couple de points de terminaison 120 encore inconnu de ladite sonde réseau (sachant que ladite sonde réseau est associée au point de terminaison 120 de sortie du tunnel de communication, pour le sens de communication considéré).

Dans une étape 502, dans un mode de réalisation particulier, la sonde réseau déduit l'adresse d'une sonde réseau distante, avec laquelle ladite sonde réseau doit collaborer pour la surveillance du trafic du tunnel de communication en question. Pour ce faire, ladite sonde réseau récupère l'adresse du point de terminaison distant, c'est-à-dire celui qui est de l'autre côté du tunnel de communication qui a été nouvellement détecté à l'étape 501. L'adresse destination correspond au point de terminaison 120 auquel est associée ladite sonde réseau, donc l'adresse du point de terminaison distant est l'adresse source. A noter qu'aucune inspection profonde de paquet n'est requise. Ladite sonde réseau déduit alors l'adresse de la sonde réseau distante, avec laquelle ladite sonde réseau doit collaborer pour surveiller le tunnel de communication en question, en appliquant la fonction de translation bijective, comme déjà expliqué ci-avant. L'étape 502 est l'équivalente de l'étape 402, de l'autre côté du tunnel de communication, afin de permettre d'établir les communications inter-sondes.

Comme déjà évoqué, d'autres approches de partage de plan d'adressage peuvent être implémentées.

Dans une étape 503, la sonde réseau effectue des captures et des mesures de débit de données pour le tunnel de communication en question. Les mesures de débit de données sont réalisées par comptage de volume de données reçues entre des paquets fanions successifs, détectés dans le trafic sortant du tunnel de communication. Les mesures de débit de données peuvent être réalisées par type de service dans le tunnel de communication, par exemple en s'appuyant sur une information de type de service (e.g. champ DSCP) incluse dans les paquets d'encapsulation du tunnel de communication.

Dans une étape 504, la sonde réseau effectue une surveillance du trafic de données dans le tunnel de communication en question, à partir des mesures effectuées à l'étape 503. Comme déjà indiqué, les paquets fanions servent de référence d'horloge pour déterminer des variations de cadencement entre l'entrée et la sortie du tunnel de communication, comme schématiquement illustré sur la Fig. 6.

Une boucle est alors réalisée entre les étapes 504 et 503, de sorte à surveiller le trafic dans le tunnel de communication en question, par cycles temporels définis par les paquets fanions.

La Fig. 6 illustre schématiquement une variation de cadencement de flux de données dans un tunnel de communication T.

En entrée du tunnel de communication, les données sont transmises (par exemple pour un type de service donné) selon un débit DR-tx. L'injecteur 150 de la sonde réseau en entrée du tunnel de communication transmet, à période constante, des paquets fanions 1 à 7 dans le flux de données entrant dans le tunnel de communication. Les paquets fanions 1 à 7 sont donc transmis par le point de terminaison 120 en entrée du tunnel de communication à des instants respectifs t1 à t7 séparés par une période fixe configurée Ts. La période Ts peut être définie en fonction d'une bande passante et d'une latence attendue (e.g., théorique) dans le réseau de communication 100a via lequel est établi le tunnel de communication T.

En sortie du tunnel de communication, les données sont reçues (par exemple pour un type de service donné) selon un débit DR-rx qui diffère typiquement du débit DR-tx en entrée du tunnel de communication T. Les paquets fanions 1 et 3 à 7 sont donc reçus par le point de terminaison 120 en sortie du tunnel de communication à des instants respectifs t'1 et t'3 à t'7 qui ne sont pas séparés par la période fixe Ts, et sur la Fig. 6, le paquet 2 a été perdu en route. Le flux de données a donc subi une variation de cadencement dans le tunnel de communication T supervisé.

Grâce à l'information d'horodatage contenue dans les paquets fanions, la sonde réseau en sortie du tunnel de communication est en mesure de déterminer le cadencement en entrée du tunnel de communication. En déterminant un horodatage des paquets fanions reçus en sortie du tunnel de communication (récupération d'une information représentative de l'instant de réception), la sonde réseau en sortie du tunnel de communication est en mesure de déterminer le cadencement en sortie du tunnel de communication. En comparant le cadencement en entrée du tunnel de communication et le cadencement en sortie du tunnel de communication, la variation de cadencement dans le tunnel de communication T supervisé peut être déterminée. Le même raisonnement peut être appliqué en entrée du tunnel de communication, dès que la sonde réseau en amont du tunnel de communication a récupéré un historique horodaté de mesures effectuées par la sonde réseau distante en réception des paquets fanions.

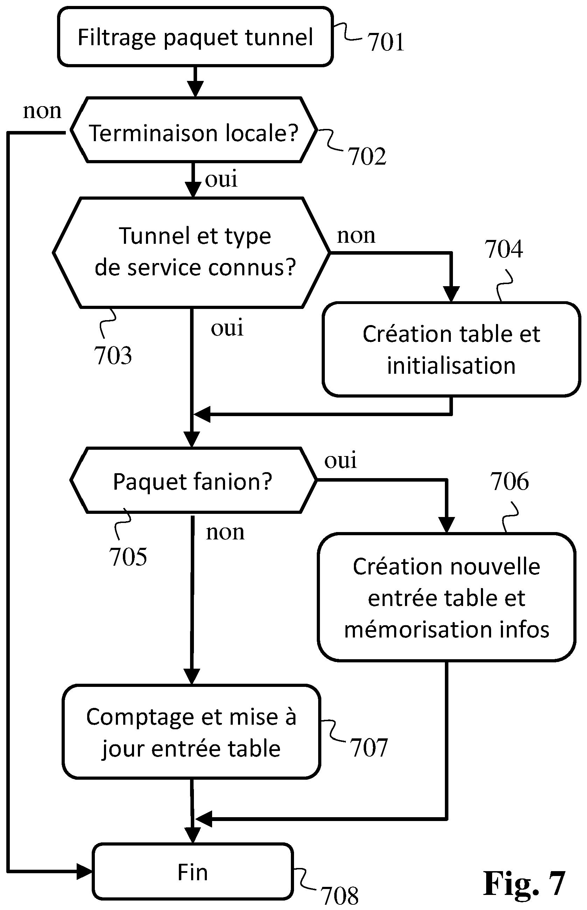

La Fig. 7 illustre schématiquement un organigramme de création et de mise à jour d'une ou plusieurs tables de mesures stockant des informations représentatives de la variation de cadencement de flux de données telle que schématiquement illustrée sur la Fig. 6. L'organigramme de la Fig. 7 est implémenté par chaque sonde réseau, et plus particulièrement par chaque gestionnaire de plan de contrôle (e.g., CPM1 170a) dans l'architecture modulaire schématiquement illustrée sur la Fig. 1C.

Dans une étape 701, la sonde réseau obtient un paquet de données du tunnel de communication, résultant du filtrage réalisé par le module de capture 165 sur l'ensemble des paquets de données transitant (émission / réception) via le point de terminaison 120 auquel ladite sonde réseau est associée.

Dans une étape 702, la sonde réseau détermine si le paquet de données concerne le point de terminaison 120 auquel ladite sonde réseau est associée. Si tel n'est pas le cas, il est mis fin à l'algorithme dans une étape 708 ; sinon, une étape 703 est effectuée. Dans le cas d'un rôle de sonde réseau amont par rapport au tunnel de communication, l'adresse source pointe sur le point de terminaison 120 auquel ladite sonde réseau est associée. Dans le cas d'un rôle de sonde réseau aval par rapport au tunnel de communication, l'adresse destination pointe sur le point de terminaison 120 auquel ladite sonde réseau est associée.

Dans l'étape 703, la sonde réseau détermine si le paquet de données filtré est issu d'un tunnel de communication déjà connu de ladite sonde réseau. Préférentiellement, les mesures étant effectuées par type de service, la sonde réseau détermine auquel cas, en outre, si le type de service est déjà connu pour le tunnel de communication. Le tunnel de communication est déjà connu si l'adresse source et l'adresse destination du paquet filtré forment un couple de points de terminaison 120 identifiés en mémoire de la sonde réseau. Si les conditions ci-dessus sont vérifiées, une étape 705 est effectuée ; sinon, une étape 704 est effectuée.

Dans l'étape 704, la sonde réseau crée une table de mesures pour le tunnel de communication nouvellement détecté et/ou une table pour le type de service nouvellement détecté. La sonde réseau initialise chaque table de mesures ainsi créée.

Par exemple, chaque table de mesures est adaptée pour inclure 256 échantillons. Lorsque la table de mesures en question devient pleine, la sonde réseau écrase l'échantillon le plus ancien lorsque ladite sonde réseau doit stocker un nouvel échantillon dans ladite table de mesures.

Dit autrement, la sonde réseau instancie en mémoire (dans une base de données, par exemple) un descripteur, pour le tunnel de communication nouvellement détecté et/ou le type de service nouvellement détecté, permettant de stocker ultérieurement des captures et des métriques relatives à des mesures de trafic de données dudit tunnel de communication.

Puis, l'étape 705 est effectuée.

Dans l'étape 705, la sonde réseau détermine si le paquet de données filtré est un paquet fanion. Si tel est le cas, une étape 706 est effectuée ; sinon, une étape 707 est effectuée.

Dans l'étape 706, la sonde réseau crée une nouvelle entrée dans la table de mesures qui correspond au tunnel de communication, et éventuellement au type de service auquel le paquet fanion correspond. Chaque entrée de table correspond à un échantillon.

Dans un mode de réalisation particulier, lorsque la sonde réseau a un rôle de sonde amont (i.e., sonde réseau en amont du tunnel de communication en question pour le sens de communication considéré), chaque entrée de table inclut :
- un champ d'information d'horodatage telle que contenue dans le paquet fanion qui a entraîné la création de l'entrée dans la table de mesures ;
- un champ de numéro de séquence tel que contenu dans le paquet fanion qui a entraîné la création de l'entrée dans la table de mesures ;
- un champ de comptage de données transitant dans le tunnel de communication, pour le sens de communication considéré (pour le type de service auquel le paquet fanion correspond, si applicable).

Et lorsque la sonde réseau a un rôle de sonde aval (i.e., sonde réseau en aval du tunnel de communication en question pour le sens de communication considéré), chaque entrée de table inclut :
- un champ d'information d'horodatage telle que contenue dans le paquet fanion qui a entraîné la création de l'entrée dans la table de mesures ;
- un champ d'information d'horodatage marquant l'instant auquel le paquet fanion, qui a entraîné la création de l'entrée dans la table de mesures, a été reçu (horodatage de capture) ;
- un champ de numéro de séquence tel que contenu dans le paquet fanion qui a entraîné la création de l'entrée dans la table de mesures ;
- un champ de comptage de données transitant dans le tunnel de communication, pour le sens de communication considéré (pour le type de service auquel le paquet fanion correspond, si applicable).

Dans un autre mode de réalisation particulier, les entrées de table ont le même format quel que soit le rôle, amont ou aval, de la sonde en question, à savoir :
- un champ d'information d'horodatage telle que contenue dans le paquet fanion qui a entraîné la création de l'entrée dans la table de mesures ;
- un champ d'information d'horodatage marquant l'instant auquel le paquet fanion, qui a entraîné la création de l'entrée dans la table de mesures, a été capturé (que ce soit en amont ou en aval du tunnel de communication, selon le sens de communication auquel s'applique la table de mesures en question) ;
- un champ de numéro de séquence tel que contenu dans le paquet fanion qui a entraîné la création de l'entrée dans la table de mesures ;
- un champ de comptage de données transitant dans le tunnel de communication, pour le sens de communication considéré (pour le type de service auquel le paquet fanion correspond, si applicable).

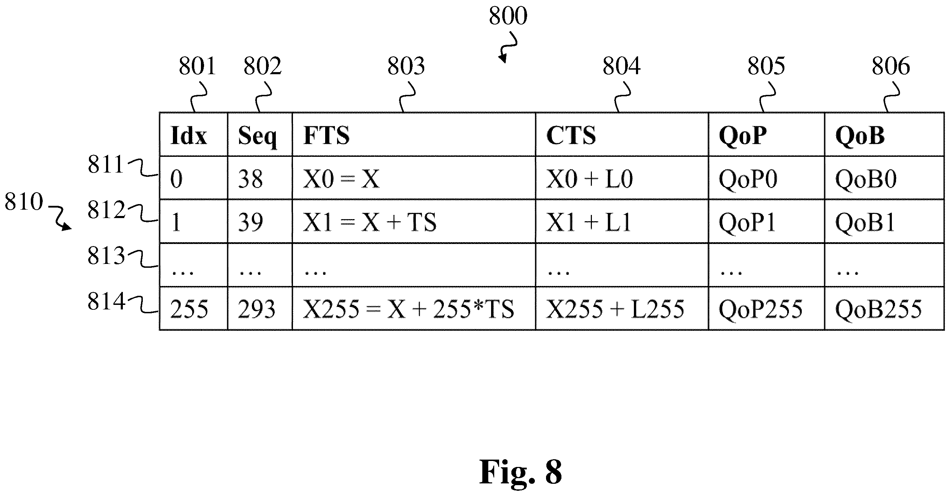

Un exemple de structure de table de mesures, pour un tunnel de communication considéré et préférentiellement un type de service (e.g., DSCP) considéré dans ledit tunnel de communication, est schématiquement illustré sur la Fig. 8.

L'exemple de la Fig. 8 s'applique autant en amont ou en aval du tunnel de communication. La structure de table de mesures illustrée sur la Fig. 8 comporte six colonnes, référencées de 801 à 806.

Pour chaque échantillon, la colonne 801 contient une valeur d'index Idx d'échantillon dans la table de mesures. Ici, les valeurs d'index Idx sont présentées dans la colonne 801 par valeurs croissantes, de 0 à 255. Les valeurs d'index Idx sont représentatives de l'ordre dans lequel les paquets fanions traités dans ladite table de mesures ont été capturés (de manière rotative, c'est-à-dire que lorsque l'entrée de valeur d'index Idx égale à 255 est remplie, l'entrée suivante à manipuler est celle de valeur d'index Idx égale à 0).

Pour chaque échantillon, la colonne 802 contient un numéro de séquence Seq tel que contenu dans le paquet fanion qui a entraîné la création, dans la table de mesure, de l'entrée correspondant à la valeur d'index Idx en question.

Pour chaque échantillon, la colonne 803 contient une information d'horodatage FTS telle que contenue dans le paquet fanion qui a entraîné la création, dans la table de mesure, de l'entrée correspondant à la valeur d'index Idx en question.

Pour chaque échantillon, la colonne 804 contient une information d'horodatage CTS marquant l'instant auquel le paquet fanion, qui a entraîné la création de l'entrée dans la table de mesures, de l'entrée correspondant à la valeur d'index Idx en question a été capturé.

Pour chaque échantillon, la colonne 805 contient une information QoP de quantité de paquets transitant dans le tunnel de communication, pour le sens de communication considéré (pour le type de service auquel le paquet fanion correspond, si applicable). L'information QoP indique la quantité de paquets capturés entre le paquet fanion, qui a entraîné la création dans la table de mesures, de l'entrée correspondant à la valeur d'index Idx en question et le prochain fanion qui a entraîné la création dans la table de mesures, de l'entrée correspondant à la valeur d'index Idx suivante, pour le sens de communication considéré (pour le type de service auquel le paquet fanion correspond, si applicable).

Pour chaque échantillon, la colonne 806 contient une information QoB de quantité d'octets transitant dans le tunnel de communication, pour le sens de communication considéré (pour le type de service auquel le paquet fanion correspond, si applicable). L'information QoB indique la quantité d'octets capturés entre le paquet fanion, qui a entraîné la création dans la table de mesures, de l'entrée correspondant à la valeur d'index Idx en question et le prochain fanion qui a entraîné la création dans la table de mesures, de l'entrée correspondant à la valeur d'index Idx suivante, pour le sens de communication considéré (pour le type de service auquel le paquet fanion correspond, si applicable).

Dans la Fig. 8, un échantillon est stocké sur chaque ligne de la table de mesures.

Une ligne 811 stocke un échantillon, à la valeur d'index Idx égale à 0, dont :
- le numéro de séquence Seq est égal à 38 ;
- l'information d'horodatage contenue dans le paquet fanion correspondant a une valeur X0 qui est égale à X, où X est un instant de référence ;
- l'information d'horodatage de capture du paquet fanion correspondant a une valeur X'0 qui est égale à X0+L0, où L0 est une durée de latence de capture par rapport à l'instant X0 où le paquet fanion en question a été émis.

Une ligne 812 stocke un échantillon, à la valeur d'index Idx égale à 1, dont :
- le numéro de séquence Seq est égal à 39 ;
- l'information d'horodatage contenue dans le paquet fanion correspondant a une valeur X1 qui est égale à X+TS, où TS est une valeur prédéfinie fixe de période de cadencement des paquets fanions ;
- l'information d'horodatage de capture du paquet fanion correspondant a une valeur X'1 qui est égale à X1+L1, où L1 est une durée de latence de capture par rapport à l'instant X1 où le paquet fanion en question a été émis.

Une ligne 814 stocke un échantillon, à la valeur d'index Idx égale à 255, dont :
- le numéro de séquence Seq est égal à 293 ;
- l'information d'horodatage contenue dans le paquet fanion correspondant a une valeur X255 qui est égale à X+255*TS ;
- l'information d'horodatage de capture du paquet fanion correspondant a une valeur X'255 qui est égale à X255+L255, où L255 est une durée de latence de capture par rapport à l'instant X255 où le paquet fanion en question a été émis.

Lors des opérations de comptage, les colonnes 805 et 806 sont mises à jour pour indiquer respectivement les quantités de paquets capturés et les quantités d'octets capturés entre des paquets fanions capturés successivement. Ainsi, après remplissage : la ligne 811 contient dans la colonne 805 une mesure de comptage de paquets QoP0, et dans la colonne 806 une mesure de comptage d'octets QoB0 ; la ligne 812 contient dans la colonne 805 une mesure de comptage de paquets QoP1, et dans la colonne 806 une mesure de comptage d'octets QoB1 ; et la ligne 814 contient dans la colonne 805 une mesure de comptage de paquets QoP255, et dans la colonne 806 une mesure de comptage d'octets QoB255.

L'exemple de table de mesures de la Fig. 8 contient d'autres lignes 813 contenant d'autres échantillons, entre la ligne 812 et la ligne 814, qui ne sont pas plus amplement détaillées dans cet exemple.

A noter que, comme il se peut que des paquets fanions soient perdus, il est possible que deux échantillons successifs dans la table de mesures aient des numéros de séquence qui ne se suivent pas. Cette situation survient plus particulièrement en aval du tunnel de communication, lorsqu'une congestion sur le chemin emprunté par le tunnel de communication a entraîné des pertes de paquets.

De retour à la Fig. 7, l'étape 708 est effectuée, où il est mis fin à l'algorithme.

Dans l'étape 707, la sonde réseau effectue un comptage des paquets transitant dans le tunnel de communication, pour le sens de communication considéré. Le paquet filtré reçu est pris en compte dans l'échantillon en cours dans la table correspondante. Par exemple, un nombre de paquets reçus à la suite du paquet fanion qui a entraîné la création de l'entrée correspondante dans la table est incrémenté d'une unité. De plus, une quantité de données reçues à la suite du paquet fanion qui a entraîné la création de l'entrée correspondante dans la table est incrémentée de la taille du paquet filtré. Il convient de noter qu'en procédant ainsi les paquets fanions ne sont pas pris en compte dans le comptage. Il est aussi possible de prendre en compte les paquets fanions dans le comptage ; dans ce cas, l'étape 706 est suivie de l'étape 707 et non de l'étape 708.

Le même mécanisme de comptage est ainsi préférentiellement appliqué en amont et en aval du tunnel de communication considéré.

Puis, l'étape 708 est effectuée, où il est mis fin à l'algorithme.

En procédant ainsi un historique des échantillonnages réalisés par la sonde réseau est stocké en mémoire.

Les historiques des échantillonnages de part et d'autre du tunnel de communication permettent de détecter et d'évaluer les situations de congestion, que ce soit en termes de latence, de gigue (« jitter » en anglais) ou de pertes de paquet lors du transit dans le tunnel de communication. Le protocole inter-sondes permet aux sondes réseau supervisant un même tunnel de communication, ou l'orchestrateur 180, de collecter ces historiques des échantillonnages, ou des informations qui en sont dérivées par calculs, de part et d'autre du tunnel de communication, afin d'évaluer d'éventuelles situations de congestion.

Dans un mode de réalisation particulier, une des sondes réseau (typiquement la sonde réseau en amont du tunnel de communication, dans un sens de communication considéré) demande à l'autre sonde réseau de l'autre côté du tunnel de communication de lui transmettre en réponse des données d'historique d'échantillonnages ou des informations qui en sont dérivées par calculs. Une requête MeasReq est transmise pour ce faire dans le cadre du protocole inter-sondes. Préférentiellement, la requête comporte un champ indiquant un intervalle de numéros de séquence de paquets fanions pour lequel l'historique, ou lesdites informations qui en sont dérivées par calculs, doit être fourni en réponse. Préférentiellement, la requête MeasReq comporte elle-même un numéro de séquence qui lui est propre, qui est repris dans une réponse MeasResp fournissant l'historique d'échantillonnages demandé, afin de faciliter l'association requête - réponse.

Lorsqu'une sonde réseau reçoit de son homologue de l'autre côté du tunnel une requête MeasReq, ladite sonde réseau détermine quel intervalle d'historique d'échantillonnages est concerné par la demande. La sonde réseau retrouve alors en mémoire l'historique d'échantillonnages demandé. Si à cause de pertes de paquets (e.g., perte du paquet fanion 2 dans la Fig. 6), l'historique d'échantillonnages disponible en mémoire de ladite sonde ne correspond pas à l'historique d'échantillonnages demandé, alors la sonde réseau retrouve en mémoire l'historique d'échantillonnages le plus proche de l'historique d'échantillonnages demandé et le transmet, ou des informations qui en sont dérivées par calculs, dans la réponse MeasResp. La réponse MeasResp inclut une information indiquant quel intervalle d'historique d'échantillonnages est réellement retourné, ou respectivement quel intervalle d'historique d'échantillonnages a été réellement utilisé pour dériver les informations retournées.

Par exemple, en s'appuyant sur la Fig. 6, une requête MeasReq demande l'historique d'échantillonnages concernant l'intervalle de numéros de séquence de paquets fanions allant de 2 à 6. Etant donné que le paquet fanion 2 a été perdu en route, la réponse MeasResp inclut l'historique d'échantillonnages concernant l'intervalle de numéros de séquence de paquets fanions allant de 1 à 6. En variante, la réponse MeasResp inclut l'historique d'échantillonnages concernant l'intervalle de numéros de séquence de paquets fanions allant de 3 à 6.

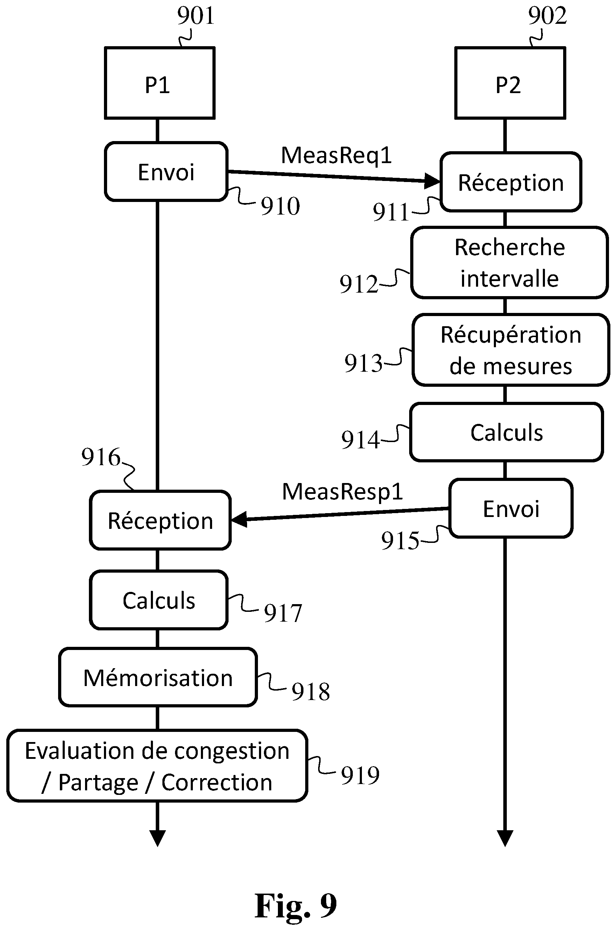

La Fig. 9 illustre schématiquement un organigramme de collaboration de sondes réseau

P1 901 et P2 902 pour évaluer une situation de congestion dans un tunnel de communication, dans un premier mode de réalisation.

Dans une étape 910, la sonde réseau P1 901, en amont du tunnel de communication, envoie une requête MeasReq à la sonde P2 902, en aval du tunnel de communication. La requête MeasReq est de type MeasReq1, et comporte préférentiellement une indication d'au moins un type de service (e.g., DSCP), ainsi qu'un champ indiquant un intervalle de numéros de séquence de paquets fanions, pour lesquels des résultats de calculs de latence, gigue et volumétrie doivent être fournis en réponse. Les calculs sont réalisés par la sonde P2 902 au vu de l'historique d'échantillonnages stocké par la sonde P2 902 vis-à-vis dudit ou desdits types de service précisés dans la requête MeasReq dans le tunnel de communication considéré. Si ce n'est implicite dans le protocole inter-sondes, la requête MeasReq indique quel tunnel de communication est concerné, et quel sens de communication est aussi concerné (par exemple, en indiquant une adresse de point de terminaison 120 source et de point de terminaison 120 destination).

Dans un mode de réalisation particulier, l'intervalle de numéros de séquence est notifié dans la requête MeasReq uniquement par un numéro de séquence de borne inférieure de l'intervalle en question, étant implicitement entendu que la borne supérieure de l'intervalle en question se termine au dernier paquet fanion reçu par la sonde P2 902.

Préférentiellement, la sonde réseau P1 901 mémorise le numéro de séquence Seq du dernier paquet fanion localement capturé et la volumétrie actuelle telle que vue par la sonde réseau P1 901 au moment de l'envoi de la requête MeasReq. Cela permet par la suite, à la sonde réseau P1 901, d'estimer la perte de volume de données dans le cas où tous les paquets fanions seraient perdus sur l'intervalle de numéros de séquence de paquets fanions sur lequel s'applique la requête MeasReq.

Dans une étape 911, la sonde réseau P2 902 reçoit la requête MeasReq émise par la sonde P1 901.

Dans une étape 912, la sonde réseau P2 902 recherche l'intervalle de numéros de séquence sur lequel porte la requête MeasReq, d'après les indications contenues dans ladite requête MeasReq. Si à cause de pertes de paquets, l'historique d'échantillonnages disponible en mémoire de la sonde réseau P2 902 ne correspond pas à l'historique d'échantillonnages demandé par la sonde réseau P1 901, alors la sonde réseau P2 902 retrouve en mémoire l'historique d'échantillonnages le plus proche de l'historique d'échantillonnages demandé par la sonde réseau P1 901.

Dans une étape 913, la sonde réseau P2 902 sélectionne la ou les tables de mesures appropriées d'après le ou les types de service (e.g., DSCP) concernés, et récupère (« retrieve » en anglais) les échantillons (mesures) qui correspondent à l'intervalle de numéros de séquence recherché et qui sont contenus dans cette ou ces tables de mesures. Cette récupération d'échantillons délimite une zone de calculs parmi l'historique d'échantillonnages stocké par la sonde réseau P2 902.

Dans une étape 914, la sonde réseau P2 902 effectue des calculs de latence, gigue et volumétrie, pour chaque type de service requis. En se référant à la Fig. 8, la sonde réseau P2 902 utilise la différence entre la colonne 804 et la colonne 803. Préférentiellement, la sonde réseau P2 902 calcule :
- la latence minimum de transit des paquets fanions de l'intervalle de numéros de séquence considéré ;
- la latence maximum de transit des paquets fanions de l'intervalle de numéros de séquence considéré ;
- la latence moyenne de transit des paquets fanions de l'intervalle de numéros de séquence considéré ;
- la gigue minimum subie par les paquets fanions de l'intervalle de numéros de séquence considéré ;
- la gigue maximum subie par les paquets fanions de l'intervalle de numéros de séquence considéré ;
- la gigue moyenne subie par les paquets fanions de l'intervalle de numéros de séquence considéré ;
- la volumétrie de transit de données (quantité de paquets, d'octets...) dans le tunnel de communication sur l'intervalle de numéros de séquence considéré.

La sonde réseau P2 902 prépare alors une réponse MeasResp. La réponse MeasResp est de type MeasResp1, adapté pour fournir les informations demandées par la requête MeasReq de type MeasReq1.

La sonde réseau P2 902 ajoute dans la réponse MeasResp les informations récupérées suivantes, pour chaque type de service requis :
- l'intervalle de numéros de séquence réellement considéré ;
- la volumétrie actuelle (c'est-à-dire, au moment où la requête MeasReq est reçue) du dernier paquet fanion reçu et le numéro de séquence Seq dudit dernier paquet fanion reçu.

Alors, dans une étape 915, la sonde réseau P2 902 envoie la réponse MeasResp, de type MeasResp1, ainsi préparée. La réponse MeasResp est envoyée à la sonde réseau P1 901 en réponse à la requête MeasReq reçue à l'étape 911.

Dans une étape 916, la sonde réseau P1 901 reçoit la réponse MeasResp émise par la sonde P2 902.

Dans une étape 917, la sonde réseau P1 901 calcule une éventuelle perte de volume de données (de paquets, d'octets...) sur l'intervalle de numéros de séquence réellement considéré par la sonde réseau P2 902 pour effectuer ses calculs et construire la réponse MeasResp. La perte de volume de données correspond à la différence entre la volumétrie calculée par la sonde réseau P1 901 vis-à-vis de son propre historique d'échantillonnages, sur l'intervalle de numéros de séquence réellement considéré par la sonde réseau P2 902, et la volumétrie transmise par la sonde réseau P2 902 dans la réponse MeasResp.

Lorsque les numéros de séquence constituant les bornes de l'intervalle de numéros de séquence de l'historique retourné dans la réponse MeasResp sont les mêmes, une perte totale des paquets fanions entre deux mesures successives est survenue. Dans ce cas, les valeurs de latence et gigue transmises par la sonde réseau P2 902 ne sont pas prises en compte par la sonde réseau P1 901. La sonde réseau P1 901 calcule alors une valeur approximée de la perte de volume de données. En effet, lorsqu'un paquet fanion a été perdu, la volumétrie est cumulée en réception sur l'échantillon du dernier paquet fanion reçu (c'est-à-dire que, en considérant que le paquet fanion de numéro séquence S2 a été perdu, la volumétrie en réception associée au numéro séquence S1 = S2-1 cumule la volumétrie des paquets non-perdus en chemin qui ont été transmis entre le paquet fanion de numéro séquence S1 et le paquet fanion de numéro séquence S3=S2+1 au lieu de simplement la volumétrie des paquets non-perdus en chemin qui ont été transmis entre le paquet fanion de numéro séquence S1 et le paquet fanion de numéro séquence S2). Ainsi, en considérant deux réponses MeasResp successives, la sonde réseau P1 901 peut estimer la perte de volume de données en déterminant la différence d'informations de « volumétrie actuelle » telles qu'indiquées dans lesdites deux réponses MeasResp successives, et en la comparant avec la différence d'informations de « volumétrie actuelle » telles que mémorisées à l'envoi des requêtes MeasReq correspondantes.

Dans une étape 918, la sonde réseau P1 901 mémorise des informations permettant de savoir où en est la surveillance du tunnel de communication vis-à-vis des historiques d'échantillonnages, pour le ou les types de service (e.g., DSCP) considérés. Typiquement, la sonde réseau P1 901 mémorise le numéro de séquence Seq du dernier paquet fanion reçu et la volumétrie actuelle, tels qu'indiqués par la sonde réseau P2 902 dans la réponse MeasResp.

Dans une étape 919, grâce aux informations de latence et de gigue transmises par la sonde réseau P2 902 et au calcul d'éventuelle perte de volume de données à l'étape 917, la sonde réseau P1 901 évalue si une éventuelle situation de congestion est rencontrée par le tunnel de communication, que ce soit en termes de latence, de gigue, ou de pertes de paquet lors du transit dans le tunnel de communication. Grâce à cette évaluation de situation de congestion, la sonde réseau P1 901 peut instruire le routeur local pour modifier des profils de transmission de données dans le ou les réseaux de communication 100a de sorte à prendre en compte, préférentiellement améliorer (e.g., gestion d'admission de services), les situations de congestion qui seraient révélées. En variante, la sonde réseau P1 901 remonte à l'orchestrateur 180 des informations relatives aux calculs, de sorte à permettre à l'orchestrateur 180 d'ajuster la gestion d'admission de services.

Faire effectuer les calculs de latence, gigue et volumétrie en réception permet que le message MeasResp soit de petite taille comparativement à l'envoi des mesures brutes. Ainsi, le protocole inter-sondes a un coût réduit sur la consommation de bande passante.

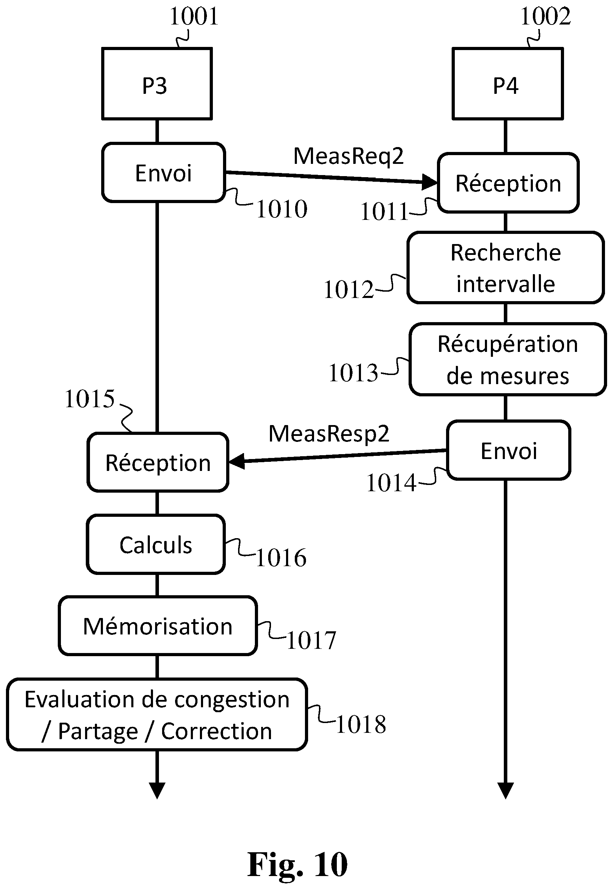

Cependant, plutôt que les calculs de latence, gigue et volumétrie en réception soient effectués par la sonde réseau aval, ces calculs peuvent être réalisés par la sonde amont. La sonde amont doit alors récupérer tout ou partie de l'historique d'échantillonnages de la sonde aval. Cette approche est particulièrement avantageuse lorsque l'injecteur 150 est placé en amont du point de terminaison 120 local et que le routeur local implique par lui-même une latence de transit non négligeable par rapport à la latence de transit du tunnel de communication supervisé. Cette situation est présentée ci-après en relation avec la Fig. 10.

La Fig. 10 illustre schématiquement un organigramme de collaboration de sondes réseau P3 1001 et P4 1002 pour évaluer une situation de congestion dans un tunnel de communication, dans un deuxième mode de réalisation. Dans ce deuxième mode de réalisation, l'ensemble des calculs sont réalisés par la sonde amont, la sonde aval transmettant simplement tout ou partie du contenu de sa ou ses tables de mesures.

Dans une étape 1010, la sonde réseau P3 1001, en amont du tunnel de communication, envoie une requête MeasReq à la sonde P4 1002, en aval du tunnel de communication. La requête MeasReq est de type MeasReq2, et comporte préférentiellement une indication d'au moins un type de service (e.g., DSCP) pour lesquels l'historique d'échantillonnages doit être fourni en réponse. Si ce n'est implicite dans le protocole inter-sondes (par exemple, l'ensemble de la ou des tables de mesures concernées), la requête MeasReq contient un champ indiquant un intervalle de numéros de séquence de paquets fanions, pour lequel l'historique d'échantillonnages doit être fourni en réponse. Si ce n'est implicite dans le protocole inter-sondes, la requête MeasReq indique quel tunnel de communication est concerné, et quel sens de communication est aussi concerné (par exemple, en indiquant une adresse de point de terminaison 120 source et de point de terminaison 120 destination).

Préférentiellement, la sonde réseau P3 1001 mémorise le numéro de séquence Seq du dernier paquet fanion localement capturé et la volumétrie actuelle telle que vue par la sonde réseau P3 1001 au moment de l'envoi de la requête MeasReq. Cela permet par la suite, à la sonde réseau P3 1001, d'estimer la perte de volume de données dans le cas où tous les paquets fanions seraient perdus sur l'intervalle de numéros de séquence de paquets fanions sur lequel s'applique la requête MeasReq.

Dans une étape 1011, la sonde réseau P4 1002 reçoit la requête MeasReq émise par la sonde P3 1001.

Dans une étape optionnelle 1012, la sonde réseau P4 1002 recherche l'intervalle de numéros de séquence sur lequel porte la requête MeasReq. L'étape 1012 est optionnelle en ce que le protocole inter-sondes peut impliquer que la requête MeasReq concerne l'ensemble de l'historique d'échantillonnages disponible auprès de la sonde réseau P4 1002. Sinon, la sonde réseau P4 1002 recherche l'intervalle de numéros de séquence d'après les indications contenues dans ladite requête MeasReq. Si à cause de pertes de paquets, l'historique d'échantillonnages disponible en mémoire de la sonde réseau P4 1002 ne correspond pas à l'historique d'échantillonnages demandé par la sonde réseau P3 1001, alors la sonde réseau P4 1002 retrouve en mémoire l'historique d'échantillonnages le plus proche de l'historique d'échantillonnages demandé par la sonde réseau P3 1001.

Dans une étape 1013, la sonde réseau P4 1002 sélectionne la ou les tables de mesures appropriées d'après le ou les types de service (e.g., DSCP) concernés, et récupère (« retrieve » en anglais) les échantillons (mesures) qui correspondent à l'intervalle de numéros de séquence souhaité et qui sont contenus dans cette ou ces tables de mesures.

La sonde réseau P4 1002 prépare alors une réponse MeasResp. La réponse MeasResp est de type MeasResp2, adapté pour fournir les informations demandées par la requête MeasReq de type MeasReq2. La réponse MeasResp inclut les échantillons (mesures) récupérés à l'étape 1013.

La sonde réseau P4 1002 inclut préférentiellement dans la réponse MeasResp les informations récupérées suivantes, pour chaque type de service requis :
- l'intervalle de numéros de séquence réellement considéré ;
- la volumétrie actuelle (c'est-à-dire, au moment où la requête MeasReq est reçue) du dernier paquet fanion reçu et le numéro de séquence Seq dudit dernier paquet fanion reçu.

Dans une étape 1014, la sonde réseau P4 1002 envoie la réponse MeasResp, de type MeasResp2, ainsi préparée. La réponse MeasResp est envoyée à la sonde réseau P3 1001 en réponse à la requête MeasReq reçue à l'étape 1011.

Dans une étape 1015, la sonde réseau P3 1001 reçoit la réponse MeasResp émise par la sonde P4 1002. La sonde réseau P3 1001 connaît ainsi la liste des paquets fanions effectivement capturés par la sonde réseau P4 1002 (et donc par déduction, ceux qui ont été perdus en chemin).

Dans une étape 1016, la sonde réseau P3 1001 effectue des calculs de latence, gigue et volumétrie, pour chaque type de service requis, grâce à l'historique d'échantillonnages reçu dans la réponse MeasResp. En se basant sur les mêmes données, la sonde réseau P3 1001 peut effectuer les mêmes calculs que la sonde réseau P2 902 dans l'étape 914. Ainsi, préférentiellement, la sonde réseau P3 1001 calcule :
- la latence minimum de transit des paquets fanions de l'intervalle de numéros de séquence considéré ;
- la latence maximum de transit des paquets fanions de l'intervalle de numéros de séquence considéré ;
- la latence moyenne de transit des paquets fanions de l'intervalle de numéros de séquence considéré ;
- la gigue minimum subie par les paquets fanions de l'intervalle de numéros de séquence considéré ;
- la gigue maximum subie par les paquets fanions de l'intervalle de numéros de séquence considéré ;
- la gigue moyenne subie par les paquets fanions de l'intervalle de numéros de séquence considéré ;
- la volumétrie de transit de données (quantité de paquets, d'octets...) dans le tunnel de communication sur l'intervalle de numéros de séquence considéré.

La sonde réseau P3 1001 calcule en outre une éventuelle perte de volume de données (de paquets, d'octets...) sur l'intervalle de numéros de séquence réellement considéré (à cause des pertes éventuelles de paquets fanions). La perte de volume de données correspond à la différence entre la volumétrie calculée par la sonde réseau P3 1001 vis-à-vis de son propre historique d'échantillonnages, sur l'intervalle de numéros de séquence réellement considéré, et la volumétrie calculée par la sonde réseau P3 1001 vis-à-vis de l'historique d'échantillonnages reçu dans la réponse MeasResp.

Lorsque les numéros de séquence constituant les bornes de l'intervalle de numéros de séquence de l'historique retourné dans la réponse MeasResp sont les mêmes, une perte totale des paquets fanions entre deux mesures successives est survenue. Dans ce cas, les valeurs de latence et gigue ne sont pas calculées par la sonde réseau P3 1001. La sonde réseau P3 1001 calcule alors une valeur approximée de la perte de volume de données, comme déjà expliqué ci-dessus en relation avec la Fig. 9. Ainsi, en considérant deux réponses MeasResp successives, la sonde réseau P3 1001 peut estimer la perte de volume de données en déterminant la différence d'informations de « volumétrie actuelle » telles qu'indiquées dans lesdites deux réponses MeasResp successives, et en la comparant avec la différence d'informations de « volumétrie actuelle » telles que mémorisées à l'envoi des requêtes MeasReq correspondantes.

Dans une étape 1017, la sonde réseau P3 1001 mémorise des informations permettant de savoir où en est la surveillance du tunnel de communication vis-à-vis des historiques d'échantillonnages, pour le ou les types de service (e.g., DSCP) considérés. Typiquement, la sonde réseau P3 1001 mémorise le numéro de séquence Seq du dernier paquet fanion reçu et la volumétrie actuelle, tels que fournis par la sonde réseau P4 1002 dans la réponse MeasResp.

Dans une étape 1018, grâce aux calculs de latence, de gigue et d'éventuelle perte de volume de données à l'étape 1016, la sonde réseau P3 1001 évalue si une éventuelle situation de congestion est rencontrée par le tunnel de communication, que ce soit en termes de latence, de gigue, ou de pertes de paquet lors du transit dans le tunnel de communication. Grâce à cette évaluation de situation de congestion, la sonde réseau P3 1001 peut instruire le routeur local pour modifier des profils de transmission de données dans le ou les réseaux de communication 100a de sorte à prendre en compte, préférentiellement améliorer (e.g., gestion d'admission de services), les situations de congestion qui seraient révélées. En variante, la sonde réseau P3 1001 remonte à l'orchestrateur 180 des informations relatives aux calculs, de sorte à permettre à l'orchestrateur 180 d'ajuster la gestion d'admission de services.

Il convient de noter que l'algorithme de la Fig. 10 peut être inversé, c'est-à-dire que la sonde aval obtient l'historique d'échantillonnages de la sonde amont et effectue l'ensemble des calculs.

Dans un mode de réalisation particulier applicable aux algorithmes des Figs. 9 et 10, la sonde réseau P3 1001 calcule une information supplémentaire de latence et une information supplémentaire de gigue, qui sont liées à la qualité de service QoS (« Quality of Service » en anglais) du routeur local lui-même, en comparant les informations d'horodatage contenues dans les paquets fanions émis et les informations d'horodatage de capture des paquets fanions capturés par ladite sonde réseau P3 1001. La latence dans le tunnel de communication est alors ajustée en retranchant la latence induite par le routeur au calcul de latence effectué sur la base des échantillons reçus de la sonde réseau P4 1002. De même, la gigue dans le tunnel de communication est alors ajustée en retranchant la gigue induite par le routeur au calcul de gigue effectué sur la base des échantillons reçus de la sonde réseau P4 1002. Selon un mode de réalisation complémentaire, la sonde réseau P3 1001 estime en outre une éventuelle perte de volume de données liée au routeur local lui-même. Etant donné que la sonde réseau P3 1001 ne connaît pas le volume de données effectivement issu du réseau de communication 100b en amont du point de terminaison 120 100b, la sonde réseau P3 1001 effectue une estimation d'éventuelle perte de volume des données issues du réseau de communication 100b en se basant sur les éventuelles pertes subies par ses propres paquets fanions (i.e., ceux injectés par l'injecteur 150 local et qui doivent être normalement détectés par le point de capture local de la sonde réseau amont).

Dans un mode de réalisation particulier applicable aux algorithmes des Figs. 9 et 10, lorsque les tunnels de communication sont implémentés grâce au protocole GRE ou au protocole mGRE, les paquets fanions peuvent être injectés et capturés par type de service (e.g., DSCP) et en outre par flux (e.g., flux IP LAN). Les informations de flux par paquet fanion sont alors prises en compte par les sondes réseau et les calculs de volumétrie et d'éventuelle perte de volume de données sont réalisés par flux et par type de service, au lieu d'être réalisés par type de service uniquement.

Un mode de réalisation particulier hybride par rapport aux algorithmes des Figs. 9 et 10 peut aussi être implémenté. Le calcul de volumétrie est alors réalisé par la sonde réseau aval, et les calculs de latence et de gigue sont réalisés par la sonde réseau amont. Pour ce faire, la réponse MeasResp est de type MeasResp3. La réponse MeasResp inclut alors les informations de numéro de séquence Seq et d'horodatages, mais pas les informations de volume de données. En relation avec la Fig. 8, les données contenues dans les colonnes 805 et 806 sont omises. La réponse MeasResp inclut aussi le résultat de calcul de volumétrie effectué par la sonde réseau aval. La réponse MeasResp peut toutefois aussi inclure la volumétrie actuelle (c'est-à-dire, au moment où la requête MeasReq est reçue) du dernier paquet fanion reçu et le numéro de séquence Seq dudit dernier paquet fanion reçu. Cela permet de trouver un compromis de consommation de bande passante par le protocole inter-sondes, tout en conservant la justesse des résultats de calculs de latence et de gigue.

## Revendications

1. Procédé implémenté dans un système de communication comportant une pluralité de routeurs (110), une première sonde réseau étant associée à un premier routeur (110) de ladite pluralité de routeurs (110) et à un premier point de terminaison (120) du premier routeur (110), une deuxième sonde réseau étant associée à un deuxième routeur (110) de ladite pluralité de routeurs (110) et à un deuxième point de terminaison (120) du premier routeur (110), chaque sonde réseau étant configurée pour effectuer des mesures de débit de données entrant dans un tunnel de communication entre le premier point de terminaison (120) et le deuxième point de terminaison (120) et sortant dudit tunnel de communication, le procédé comportant les étapes suivantes dans le cadre d'une surveillance d'un trafic dans le tunnel de communication :
- injecter de façon périodique, par la première sonde réseau, en parallèle du trafic du tunnel de communication, des paquets fanions délimitant des périodes temporelles sur lesquelles sont effectuées les mesures de débit de données, chaque paquet fanion incluant une information d'horodatage exprimant une référence temporelle d'injection dudit paquet fanion, et chaque sonde réseau ayant accès au plan de données du routeur qui lui est associé afin de pouvoir injecter les paquets fanions afin de cadencer les mesures de débit de données dans le tunnel de communication et de capter le volume de paquets transmis dans le tunnel de communication et les paquets fanions y afférents ;
- collecter des informations relatives à une variation de cadencement de flux de données dans le tunnel de communication, la variation de cadencement de flux de données étant mesurée grâce à une différence entre les informations d'horodatage contenues dans les paquets fanions et des informations d'horodatage d'instant de capture desdits paquets fanions par la deuxième sonde réseau ;
- évaluer d'éventuelles situations de congestion subies par le tunnel de communication en fonction desdites informations collectées.

2. Procédé selon la revendication 1, comprenant l'étape suivante :
- calculer une éventuelle perte de volume de données dans le tunnel de communication, par comparaison entre un comptage de volume de données en sortie du tunnel de communication entre des paquets fanions successifs, détectées par la deuxième sonde réseau, et un comptage de volume de données en entrée du tunnel de communication entre des paquets fanions successifs, détectées par la première sonde réseau.

3. Procédé selon la revendication 1 ou 2, dans lequel les paquets fanions sont des paquets de type UDP émis sur un port dédié auxdits paquets fanions.

4. Procédé selon l'une quelconque des revendications 1 à 3, dans lequel les paquets fanions sont injectés pour chaque type de service parmi une pluralité de types de service transportés par le tunnel de communication.

5. Procédé selon l'une quelconque des revendications 1 à 4, dans lequel les paquets fanions sont injectés dans un plan utilisateur en amont du premier point de terminaison par rapport au tunnel de communication.

6. Procédé selon l'une quelconque des revendications 1 à 5, dans lequel, pour collecter les informations relatives à une variation de cadencement de flux de données dans le tunnel de communication, au moins la deuxième sonde réseau comporte au moins une table de mesures pour stocker un historique d'échantillonnages de paquets fanions capturés en sortie du tunnel de communication, chaque entrée de la table de mesures correspondant à un échantillon comportant :
- un champ d'information d'horodatage telle que contenue dans le paquet fanion correspondant à l'échantillon en question ;
- un champ d'information d'horodatage marquant l'instant auquel le paquet fanion correspondant à l'échantillon en question a été capturé ;
- un champ de numéro de séquence tel que contenu dans le paquet fanion correspondant à l'échantillon en question ; et
- un champ de comptage de données transitant dans le tunnel de communication entre le paquet fanion correspondant à l'échantillon en question et le paquet fanion correspondant à l'échantillon suivant dans la table de mesures.

7. Procédé selon la revendication 6, dans lequel la première sonde réseau transmet à la deuxième sonde réseau une requête requérant de transmettre en réponse des informations dérivées par calculs d'un historique d'échantillonnages des paquets fanions reçus par la deuxième sonde réseau, la requête impliquant un intervalle de numéros de séquence à considérer, les calculs étant destinés à évaluer les éventuelles situations de congestion et incluant :
- une latence minimum de transit des paquets fanions dudit intervalle de numéros de séquence ;
- une latence maximum de transit des paquets fanions dudit intervalle de numéros de séquence ;
- une latence moyenne de transit des paquets fanions dudit intervalle de numéros de séquence ;
- une gigue minimum subie par les paquets fanions dudit intervalle de numéros de séquence ;
- une gigue maximum subie par les paquets fanions dudit intervalle de numéros de séquence ;
- une gigue moyenne subie dudit intervalle de numéros de séquence ;
- une volumétrie de transit de données dans le tunnel de communication sur ledit intervalle de numéros de séquence.

8. Procédé selon la revendication 6, dans lequel la première sonde réseau transmet à la deuxième sonde réseau une requête requérant de transmettre en réponse tout ou partie de l'historique d'échantillonnages des paquets fanions reçus par la deuxième sonde réseau, la première sonde réseau réalisant alors des calculs destinés à évaluer les éventuelles situations de congestion et incluant :
- une latence minimum de transit des paquets fanions dudit intervalle de numéros de séquence ;
- une latence maximum de transit des paquets fanions dudit intervalle de numéros de séquence ;
- une latence moyenne de transit des paquets fanions dudit intervalle de numéros de séquence ;
- une gigue minimum subie par les paquets fanions dudit intervalle de numéros de séquence ;
- une gigue maximum subie par les paquets fanions dudit intervalle de numéros de séquence ;
- une gigue moyenne subie dudit intervalle de numéros de séquence ;
- une volumétrie de transit de données dans le tunnel de communication sur ledit intervalle de numéros de séquence.

9. Procédé selon l'une quelconque des revendications 1 à 8, dans lequel la première sonde réseau comporte au moins une autre table de mesures pour stocker un historique d'échantillonnages de paquets fanions capturés en entrée du tunnel de communication, chaque entrée de cette autre table de mesures correspondant à un échantillon comportant :
- un champ d'information d'horodatage telle que contenue dans le paquet fanion correspondant à l'échantillon en question ;
- un champ d'information d'horodatage marquant l'instant auquel le paquet fanion correspondant à l'échantillon en question a été capturé ;
- un champ de numéro de séquence tel que contenu dans le paquet fanion correspondant à l'échantillon en question ; et
- un champ de comptage de données transitant dans le tunnel de communication entre le paquet fanion correspondant à l'échantillon en question et le paquet fanion correspondant à l'échantillon suivant dans la table de mesures.

10. Procédé selon la revendication 9, dans lequel la première sonde réseau calcule une information supplémentaire de latence et une information supplémentaire de gigue, qui sont liées à la qualité de service du premier routeur, en comparant les informations d'horodatage contenues dans les paquets fanions injectés et les informations d'horodatage de capture des paquets fanions capturés par ladite première sonde réseau.

11. Procédé selon la revendication 10, dans lequel la première sonde réseau estime en outre une éventuelle perte de volume de données qui est liée à la qualité de service du premier routeur, à partir de détection de pertes de paquets fanions injectés par la première sonde réseau.

12. Système de communication comportant des sondes réseau et une pluralité de routeurs (110), une première sonde réseau étant associée à un premier routeur (110) de ladite pluralité de routeurs (110) et à un premier point de terminaison (120) du premier routeur (110), une deuxième sonde réseau étant associée à un deuxième routeur (110) de ladite pluralité de routeurs (110) et à un deuxième point de terminaison (120) du premier routeur (110), chaque sonde réseau étant configurée pour effectuer des mesures de débit de données entrant dans un tunnel de communication entre le premier point de terminaison (120) et le deuxième point de terminaison (120) et sortant dudit tunnel de communication, le système de communication comportant de la circuiterie électronique configurée pour effectuer les étapes suivantes dans le cadre d'une surveillance d'un trafic dans le tunnel de communication :
- injecter de façon périodique, par la première sonde réseau, en parallèle du trafic du tunnel de communication, des paquets fanions délimitant des périodes temporelles sur lesquelles sont effectuées les mesures de débit de données, chaque paquet fanion incluant une information d'horodatage exprimant une référence temporelle d'injection dudit paquet fanion, et chaque sonde réseau ayant accès au plan de données du routeur qui lui est associé afin de pouvoir injecter les paquets fanions afin de cadencer les mesures de débit de données dans le tunnel de communication et de capter le volume de paquets transmis dans le tunnel de communication et les paquets fanions y afférents ;
- collecter des informations relatives à une variation de cadencement de flux de données dans le tunnel de communication, la variation de cadencement de flux de données étant mesurée grâce à une différence entre les informations d'horodatage contenues dans les paquets fanions et des informations d'horodatage d'instant de capture desdits paquets fanions par la deuxième sonde réseau ;
- évaluer d'éventuelles situations de congestion subies par le tunnel de communication en fonction desdites informations collectées.

## Patentansprüche

1. Verfahren, das in einem Kommunikationssystem implementiert ist, das eine Vielzahl von Routern (110) umfasst, wobei eine erste Netzwerksonde mit einem ersten Router (110) der Vielzahl von Routern (110) und mit einem ersten Endpunkt (120) des ersten Routers (110) assoziiert ist, wobei eine zweite Netzwerksonde mit einem zweiten Router (110) der Vielzahl von Routern (110) und mit einem zweiten Endpunkt (120) des ersten Routers (110) assoziiert ist, wobei jede Netzwerksonde dazu konfiguriert ist, Messungen einer Rate von Daten vorzunehmen, die in einen Kommunikationstunnel zwischen dem ersten Endpunkt (120) und dem zweiten Endpunkt (120) eintreten und aus dem Kommunikationstunnel austreten, wobei das Verfahren im Rahmen einer Überwachung eines Verkehrs in dem Kommunikationstunnel die folgenden Schritte umfasst:
- periodisches Einschleusen, durch die erste Netzwerksonde, parallel zu dem Verkehr des Kommunikationstunnels, von Flag-Paketen, die Zeitperioden begrenzen, in denen die Datenratenmessungen vorgenommen werden, wobei jedes Flag-Paket eine Zeitstempelinformation umfasst, die eine Zeitreferenz der Einschleusung des Flag-Pakets angibt, und wobei jede Netzwerksonde auf die Datenebene des Routers, der mit ihr assoziiert ist, zugreifen kann, um die Flag-Pakete einschleusen zu können, um die Datenratenmessungen in dem Kommunikationstunnel zu takten und das in dem Kommunikationstunnel übertragene Paketvolumen und die zugehörigen Flag-Pakete zu erfassen;
- Sammeln von Informationen über eine Datenstromtaktungsveränderung in dem Kommunikationstunnel, wobei die Datenstromtaktungsveränderung anhand einer Differenz zwischen den Zeitstempelinformationen, die in den Flag-Paketen enthalten sind, und Zeitstempelinformationen über einen Zeitpunkt der Erfassung der Flag-Pakete durch die zweite Netzwerksonde gemessen wird;
- Bewerten möglicher Überlastungssituationen, die der Kommunikationstunnel erfahren hat, in Abhängigkeit von den gesammelten Informationen.

2. Verfahren nach Anspruch 1, das den folgenden Schritt beinhaltet:
- Berechnen eines möglichen Datenvolumenverlusts in dem Kommunikationstunnel durch Vergleichen einer Zählung, zwischen aufeinanderfolgenden Flag-Paketen, eines Volumens von Daten am Ausgang des Kommunikationstunnels, die durch die zweite Netzwerksonde detektiert werden, und einer Zählung, zwischen aufeinanderfolgenden Flag-Paketen, eines Volumens von Daten am Eingang des Kommunikationstunnels, die durch die erste Netzwerksonde detektiert werden.

3. Verfahren nach Anspruch 1 oder 2, wobei die Flag-Pakete Pakete vom Typ UDP sind, die an einem für die Flag-Pakete vorgesehenen Port gesendet werden.

4. Verfahren nach einem der Ansprüche 1 bis 3, wobei die Flag-Pakete für jeden Diensttyp aus einer Vielzahl von Diensttypen, die durch den Kommunikationstunnel transportiert werden, eingeschleust werden.

5. Verfahren nach einem der Ansprüche 1 bis 4, wobei die Flag-Pakete in Bezug auf den Kommunikationskanal stromaufwärts des ersten Endpunkts in eine Benutzerebene eingeschleust werden.

6. Verfahren nach einem der Ansprüche 1 bis 5, wobei, um die Informationen über eine Datenstromtaktungsveränderung in dem Kommunikationstunnel zu sammeln, mindestens die zweite Netzwerksonde mindestens eine Messtabelle umfasst, um einen Verlauf von Stichprobennahmen von Flag-Paketen, die am Ausgang des Kommunikationstunnel erfasst werden, zu speichern, wobei jeder Eintrag der Messtabelle einer Stichprobe entspricht, die Folgendes umfasst:
- ein Feld für eine Zeitstempelinformation, wie sie in dem Flag-Paket, das der jeweiligen Stichprobe entspricht, enthalten ist;
- ein Feld für eine Zeitstempelinformation, die den Zeitpunkt markiert, zu dem das Flag-Paket, das der jeweiligen Stichprobe entspricht, erfasst wurde;
- ein Feld für eine Sequenznummer, wie sie in dem Flag-Paket, das der jeweiligen Stichprobe entspricht, enthalten ist;
- ein Feld für eine Zählung von Daten, die zwischen dem Flag-Paket, das der jeweiligen Stichprobe entspricht, und dem Flag-Paket, das der nachfolgenden Stichprobe in der Messtabelle entspricht, durch den Kommunikationstunnel hindurchgehen.

7. Verfahren nach Anspruch 6, wobei die erste Netzwerksonde eine Anforderung an die zweite Netzwerksonde überträgt, die anfordert, reagierend darauf Informationen zu übertragen, die mit Hilfe von Berechnungen aus einem Verlauf von Stichprobennahmen der Flag-Pakete, die durch die zweite Netzwerksonde empfangen werden, abgeleitet werden, wobei die Anforderung ein zu betrachtendes Sequenznummernintervall impliziert, wobei die Berechnungen dazu bestimmt sind, die möglichen Überlastungssituationen zu bewerten, und Folgendes umfassen:
- eine minimale Transitlatenz der Flag-Pakete des Sequenznummernintervalls;
- eine maximale Transitlatenz der Flag-Pakete des Sequenznummernintervalls;
- eine mittlere Transitlatenz der Flag-Pakete des Sequenznummernintervalls;
- einen minimalen Jitter, den die Flag-Pakete des Sequenznummernintervalls erfahren haben;
- einen maximalen Jitter, den die Flag-Pakete des Sequenznummernintervalls erfahren haben;
- einen erfahrenen mittleren Jitter des Sequenznummernintervalls;
- ein Datentransitvolumen in dem Kommunikationstunnel innerhalb des Sequenznummernintervalls.

8. Verfahren nach Anspruch 6, wobei die erste Netzwerksonde eine Anforderung an die zweite Netzwerksonde überträgt, die anfordert, reagierend darauf den gesamten oder einen Teil des Verlaufs von Stichprobennahmen der Flag-Pakete, die durch die zweite Netzwerksonde empfangen werden, zu übertragen, wobei die erste Netzwerksonde in diesem Fall Berechnungen durchführt, die dazu bestimmt sind, die möglichen Überlastungssituationen zu bewerten, und Folgendes umfassen:
- eine minimale Transitlatenz der Flag-Pakete des Sequenznummernintervalls;
- eine maximale Transitlatenz der Flag-Pakete des Sequenznummernintervalls;
- eine mittlere Transitlatenz der Flag-Pakete des Sequenznummernintervalls;
- einen minimalen Jitter, den die Flag-Pakete des Sequenznummernintervalls erfahren haben;
- einen maximalen Jitter, den die Flag-Pakete des Sequenznummernintervalls erfahren haben;
- einen erfahrenen mittleren Jitter des Sequenznummernintervalls;
- ein Datentransitvolumen in dem Kommunikationstunnel innerhalb des Sequenznummernintervalls.

9. Verfahren nach einem der Ansprüche 1 bis 8, wobei die erste Netzwerksonde mindestens eine weitere Messtabelle umfasst, um einen Verlauf von Stichprobennahmen von Flag-Paketen, die am Eingang des Kommunikationstunnel erfasst werden, zu speichern, wobei jeder Eintrag dieser weiteren Messtabelle einer Stichprobe entspricht, die Folgendes umfasst:
- ein Feld für eine Zeitstempelinformation, wie sie in dem Flag-Paket, das der jeweiligen Stichprobe entspricht, enthalten ist;
- ein Feld für eine Zeitstempelinformation, die den Zeitpunkt markiert, zu dem das Flag-Paket, das der jeweiligen Stichprobe entspricht, erfasst wurde;
- ein Feld für eine Sequenznummer, wie sie in dem Flag-Paket, das der jeweiligen Stichprobe entspricht, enthalten ist;
- ein Feld für eine Zählung von Daten, die zwischen dem Flag-Paket, das der jeweiligen Stichprobe entspricht, und dem Flag-Paket, das der nachfolgenden Stichprobe in der Messtabelle entspricht, durch den Kommunikationstunnel hindurchgehen.

10. Verfahren nach Anspruch 9, wobei die erste Netzwerksonde eine zusätzliche Latenzinformation und eine zusätzliche Jitter-Information berechnet, die mit der Dienstqualität des ersten Routers verbunden sind, durch das Vergleichen der in den eingeschleusten Flag-Paketen enthaltenen Zeitstempelinformationen mit den Zeitstempelinformationen der Erfassung der Flag-Pakete, die durch die erste Netzwerksonde erfasst werden.

11. Verfahren nach Anspruch 10, wobei die erste Netzwerksonde ferner einen möglichen Datenvolumenverlust, der mit der Dienstqualität des ersten Routers verbunden ist, anhand einer Detektion von Verlusten von Flag-Paketen, die durch die erste Netzwerksonde eingeschleust werden, schätzt.

12. Kommunikationssystem, das Netzwerksonden und eine Vielzahl von Routern (110) umfasst, wobei eine erste Netzwerksonde mit einem ersten Router (110) der Vielzahl von Routern (110) und mit einem ersten Endpunkt (120) des ersten Routers (110) assoziiert ist, wobei eine zweite Netzwerksonde mit einem zweiten Router (110) der Vielzahl von Routern (110) und mit einem zweiten Endpunkt (120) des ersten Routers (110) assoziiert ist, wobei jede Netzwerksonde dazu konfiguriert ist, Messungen einer Rate von Daten vorzunehmen, die in einen Kommunikationstunnel zwischen dem ersten Endpunkt (120) und dem zweiten Endpunkt (120) eintreten und aus dem Kommunikationstunnel austreten, wobei das Kommunikationssystem elektronische Schaltkreise umfasst, die dazu konfiguriert sind, im Rahmen einer Überwachung eines Verkehrs in dem Kommunikationstunnel die folgenden Schritte vorzunehmen:
- periodisches Einschleusen, durch die erste Netzwerksonde, parallel zu dem Verkehr des Kommunikationstunnels, von Flag-Paketen, die Zeitperioden begrenzen, in denen die Datenratenmessungen vorgenommen werden, wobei jedes Flag-Paket eine Zeitstempelinformation umfasst, die eine Zeitreferenz der Einschleusung des Flag-Pakets angibt, und wobei jede Netzwerksonde auf die Datenebene des Routers, der mit ihr assoziiert ist, zugreifen kann, um die Flag-Pakete einschleusen zu können, um die Datenratenmessungen in dem Kommunikationstunnel zu takten und das in dem Kommunikationstunnel übertragene Paketvolumen und die zugehörigen Flag-Pakete zu erfassen;
- Sammeln von Informationen über eine Datenstromtaktungsveränderung in dem Kommunikationstunnel, wobei die Datenstromtaktungsveränderung anhand einer Differenz zwischen den Zeitstempelinformationen, die in den Flag-Paketen enthalten sind, und Zeitstempelinformationen über einen Zeitpunkt der Erfassung der Flag-Pakete durch die zweite Netzwerksonde gemessen wird;
- Bewerten möglicher Überlastungssituationen, die der Kommunikationstunnel erfahren hat, in Abhängigkeit von den gesammelten Informationen.

## Claims

1. Method implemented in a communication system comprising a plurality of routers (110), a first network probe being associated with a first router (110) of said plurality of routers (110) and with a first end-point (120) of the first router (110), a second network probe being associated with a second router (110) of said plurality of routers (110) and with a second end-point (120) of the first router (110), each network probe being configured to take data rate measurements of data entering a communication tunnel between the first end-point (120) and the second end-point (120) and exiting said communication tunnel, the method comprising the following steps within the context of monitoring traffic in the communication tunnel:
- periodically injecting, by way of the first network probe, in parallel with the traffic of the communication tunnel, flag packets delimiting time periods over which the data rate measurements are made, each flag packet including timestamp information expressing an injection time reference for said flag packet, and each network probe having access to the data plane of the router associated therewith in order to be able to inject the flag packets in order to time the data rate measurements in the communication tunnel and to capture the volume of packets transmitted in the communication tunnel and the flag packets related thereto;
- gathering information relating to a timing variation of a data stream in the communication tunnel, the timing variation of a data stream being measured thanks to a difference between the timestamp information contained in the flag packets and timestamp information relating to an instant at which said flag packets were captured by the second network probe;
- assessing possible congestion situations experienced by the communication tunnel as a function of said gathered information.

2. Method according to Claim 1, comprising the following step:
- computing a possible loss of data volume in the communication tunnel, by comparing a data volume count at the output of the communication tunnel between successive flag packets, detected by the second network probe, with a data volume count at the input of the communication tunnel between successive flag packets, detected by the first network probe.

3. Method according to Claim 1 or 2, wherein the flag packets are UDP type packets sent on a port dedicated to said flag packets.

4. Method according to any one of Claims 1 to 3, wherein the flag packets are injected for each type of service from among a plurality of types of service conveyed by the communication tunnel.

5. Method according to any one of Claims 1 to 4, wherein the flag packets are injected into a user plane upstream of the first end-point relative to the communication tunnel.

6. Method according to any one of Claims 1 to 5, wherein, in order to gather the information relating to a timing variation of a data stream in the communication tunnel, at least the second network probe comprises at least one measurement table for storing a sampling log of flag packets captured at the output of the communication tunnel, each entry of the measurement table corresponding to a sample comprising:
- a timestamp information field as contained in the flag packet corresponding to the sample in question;
- a timestamp information field marking the instant at which the flag packet corresponding to the sample in question was captured;
- a sequence number field as contained in the flag packet corresponding to the sample in question; and
- a data counting field for counting data passing through the communication tunnel between the flag packet corresponding to the sample in question and the flag packet corresponding to the next sample in the measurement table.

7. Method according to Claim 6, wherein the first network probe transmits a request to the second network probe requesting to transmit in response information derived from computations of a sampling log of the flag packets received by the second network probe, the request involving a range of sequence numbers to be considered, the computations being intended to assess possible congestion situations and including:
- a minimum transit latency of the flag packets of said range of sequence numbers;
- a maximum transit latency of the flag packets of said range of sequence numbers;
- an average transit latency of the flag packets of said range of sequence numbers;
- a minimum jitter level experienced by the flag packets of said range of sequence numbers;
- a maximum jitter level experienced by the flag packets of said range of sequence numbers;
- an average jitter level experienced by said range of sequence numbers;
- a volume of data passing through the communication tunnel over said range of sequence numbers.

8. Method according to Claim 6, wherein the first network probe transmits a request to the second network probe requesting to transmit in response all or some of the sampling log of the flag packets received by the second network probe, the first network probe then carrying out computations intended to assess possible congestion situations and including:
- a minimum transit latency of the flag packets of said range of sequence numbers;
- a maximum transit latency of the flag packets of said range of sequence numbers;
- an average transit latency of the flag packets of said range of sequence numbers;
- a minimum jitter level experienced by the flag packets of said range of sequence numbers;
- a maximum jitter level experienced by the flag packets of said range of sequence numbers;
- an average jitter level experienced by said range of sequence numbers;
- a volume of data passing through the communication tunnel over said range of sequence numbers.

9. Method according to any one of Claims 1 to 8, wherein the first network probe comprises at least one further measurement table for storing a sampling log of flag packets captured at the input of the communication tunnel, with each entry of this further measurement table corresponding to a sample comprising:
- a timestamp information field as contained in the flag packet corresponding to the sample in question;
- a timestamp information field marking the instant at which the flag packet corresponding to the sample in question was captured;
- a sequence number field as contained in the flag packet corresponding to the sample in question; and
- a data counting field for counting data passing through the communication tunnel between the flag packet corresponding to the sample in question and the flag packet corresponding to the next sample in the measurement table.

10. Method according to Claim 9, wherein the first network probe computes additional latency information and additional jitter information, which are related to the quality of service of the first router, by comparing the timestamp information contained in the injected flag packets with the capture timestamp information of the flag packets captured by said first network probe.

11. Method according to Claim 10, wherein the first network probe further estimates a possible loss of data volume that is related to the quality of service of the first router, from detecting losses of flag packets injected by the first network probe.

12. Communication system comprising network probes and a plurality of routers (110), a first network probe being associated with a first router (110) of said plurality of routers (110) and with a first end-point (120) of the first router (110), a second network probe being associated with a second router (110) of said plurality of routers (110) and with a second end-point (120) of the first router (110), each network probe being configured to take data rate measurements of data entering a communication tunnel between the first end-point (120) and the second end-point (120) and exiting said communication tunnel, the communication system comprising electronic circuitry configured to carry out the following steps within the context of monitoring traffic in the communication tunnel:
- periodically injecting, by way of the first network probe, in parallel with the traffic of the communication tunnel, flag packets delimiting time periods over which the data rate measurements are made, each flag packet including timestamp information expressing an injection time reference for said flag packet, and each network probe having access to the data plane of the router associated therewith in order to be able to inject the flag packets in order to time the data rate measurements in the communication tunnel and to capture the volume of packets transmitted in the communication tunnel and the flag packets related thereto;
- gathering information relating to a timing variation of a data stream in the communication tunnel, the timing variation of a data stream being measured thanks to a difference between the timestamp information contained in the flag packets and timestamp information relating to an instant at which said flag packets were captured by the second network probe;
- assessing possible congestion situations experienced by the communication tunnel as a function of said gathered information.
